# EUROPÄISCHE PATENTSCHRIFT

(11) **EP 2 965 161 B1**
(45) Veröffentlichungstag und Bekanntmachung des Hinweises auf die Patenterteilung: **17.07.2019**
(21) Anmeldenummer: 14707793.7
(22) Anmeldetag: 04.03.2014
(51) Int. Cl.: G05D 23/19, F24F 110/10, F24F 11/83, F24F 11/30, F24F 5/00, F24F 110/00, F24D 19/10, F24D 3/14

(54) **VERFAHREN UND SYSTEM ZUM TEMPERIEREN VON BAUTEILEN**
METHOD AND SYSTEM FOR THE TEMPERATURE CONTROL OF COMPONENTS
PROCÉDÉ ET SYSTÈME DE RÉGULATION DE LA TEMPÉRATURE D'ÉLÉMENTS STRUCTURAUX

(30) Priorität: 05.03.2013 CH 5422013
(43) Veröffentlichungstag der Anmeldung: 13.01.2016
(73) Patentinhaber: Oblamatik AG, 7000 Chur (CH)
(72) Erfinder: OBRIST, Roland, 7412 Scharans (CH); LANG, Edo, 7000 Chur (CH); TRIET, Philipp, 7310 Bad Ragaz (CH)
(74) Vertreter: OK pat AG
(86) Internationale Anmeldenummer: PCT/EP2014/054176
(87) Internationale Veröffentlichungsnummer: WO 2014/135538

(56) Entgegenhaltungen:
- WO-A2-2009/072759
- WO-A2-2010/095089
- WO-A2-2010/095092
- WO-A2-2010/095093
- DE-A1-102009 004 319

## Beschreibung

Die Erfindung betrifft ein Temperierverfahren zum Temperieren, also zum Heizen oder Kühlen eines Bauteils. Derartige Bauteile sind z.B. ein Boden, eine Wand oder eine Decke eines Wohn- oder Arbeits-Raums; es können aber auch alleinstehende Heiz- oder Kühlwände sein. Ein zur Durchführung dieses Temperierverfahrens geeignetes Temperiersystem umfasst typischerweise eine zum Heizen oder Kühlen eines Temperierfluids ausgebildete Temperiervorrichtung und mindestens zwei zum Durchleiten des Temperierfluids durch ein zu temperierendes Bauteil ausgebildete Temperieranordnungen, die über individuelle Vorlaufleitungsteile und über individuelle Rücklaufleitungsteile mit der Temperiervorrichtung verbunden sind. Dabei umfasst jeder der individuellen Rücklaufleitungsteile einen eigenen Rücklauftemperaturfühler zum Messen der individuellen Rücklauftemperatur des Temperierfluids aus der entsprechenden Temperieranordnung. Eine Steuerung umfasst in den individuellen Vorlaufleitungsteilen oder Rücklaufleitungsteilen angeordnete Ventile mit Stellgliedern, welche zum Einstellen eines Öffnungsgrades des jeweils zugeordneten Ventils ausgebildet sind. Diese Steuerung ist zum Ansteuern der Stellglieder und zum Ablesen der Rücklauftemperaturfühler ausgebildet und umfasst einen Raumtemperaturfühler zum Feststellen und Melden einer IST-Temperatur in einer unmittelbaren Umgebung des Bauteils.

Bei aus dem Stand der Technik bekannten Temperiersystemen erfolgt die Einstellung des Durchflusses des Temperierfluids üblicherweise statisch mittels mechanischen Durchflussstellgliedern. Die thermischen Stellglieder sind dabei als Zweipunktregelung ausgelegt und die abzugebende Energie eines beispielsweise als Heizsystem ausgelegten Temperiersystems wird im Wesentlichen durch einen aufwendigen hydraulischen Abgleich der TOP-Meter eingestellt. Diese TOP-Meter sind Stellglieder, die den Durchfluss des Temperierfluids in einem Heizkreis bestehend aus Vorlauf, Bodenheizung (= Temperieranordnung) und Rücklauf statisch einstellen. Allerdings benötigt der Installateur Kenngrössen zur Einstellung des zu erzielenden Durchflusses.

Die Kenngrössen werden aber durch den angenommenen Rohrdurchmesser (teilweise Verschlammung reduziert den wirksamen Rohrdurchmesser) und den Fliessdruck (z.B. durch Öffnen und Schliessen mehrerer Parallelstränge) des Temperierfluids beeinflusst. Die daraus resultierende Vor- und Rücklauftemperatur wird weiter durch die Vorlauftemperatur und die Temperatur der Temperieranordnung beeinflusst. Trotz Erfahrung und Anwendung grösster Sorgfalt ist deshalb jedoch nur ein ungenaues Einstellen der einzelnen Stränge oder Heizkreise möglich. Daraus resultiert eine ungleichmässige Wärmeverteilung einerseits, beziehungsweise eine ungenügende Energieeffizienz andererseits. Weiter sind bei Umbauten die theoretisch ermittelten Stellgrössen nicht verfügbar und nur mit grossem Aufwand ermittelbar. Ein weiteres Problem stellen ungenaue Raumthermostaten dar, die oft eine einfache Ein/Aus-Funktion auf eine derartige Bodenheizung ausüben.

Obwohl es Ansätze zur genaueren Ermittlung des Energieverbrauchs von Heizsystemen gibt (vgl. z.B. DE 44 17 941 A1), so fehlen bis heute jedoch weitgehend Konzepte, die wesentlichen Nachteilen des eben beschriebenen Standes der Technik erfolgreich begegnen können.

Aus dem Dokument DE 100 57 359 C2 ist ein Verfahren zur Steuerung einer Fussbodenheizung bekannt, bei dem ein Heizkreis eines Raumes innerhalb einer Periode für einen Versorgungszeitraum mit einem Wärmeträgerfluid versorgt wird und der Versorgungszeitraum in Abhängigkeit von der Raumtemperatur gewählt wird. Dabei wird neben der Raumtemperatur mindestens ein weiterer Parameter (vorzugsweise eine thermische Zeitkonstante des Raums) erfasst und in Abhängigkeit der Raumtemperatur und dieses Parameters wird die Periodenlänge und die Länge des Versorgungszeitraums gewählt. Diese Zeitkonstante ist ein Mass dafür, wie schnell sich der Raum bei der Zufuhr einer bestimmten Wärmemenge aufheizt. Zur Bestimmung dieser thermischen Zeitkonstante des Raums wird die Differenz zwischen der Rücklauftemperatur und der Vorlauftemperatur sowie die Durchflussmenge des Wärmeträgerfluids erfasst. Das Erfassen und Auswerten aller dieser Parameter ist jedoch aufwändig und benötigt entsprechende Sensorik und Algorithmen.

Aus dem Dokument DE 199 11 866 A1 ist eine Vorrichtung zum Abgleichen von Heizkreisen in Grossflächen-Heizungsanlagen bekannt. Die Heizkreise werden durch ein Konstanthalten der Temperaturdifferenz zwischen Vorlauf und Rücklauf automatisch aufeinander abgeglichen. In jedem Fall muss somit die Vorlauf- und Rücklauftemperatur gemessen werden. Mit Ziel bei allen Kreisläufen die Differenz zwischen der Vorlauftemperatur und der Rücklauftemperatur auszugleichen werden einzelne Stränge (die mit der niedrigsten Rücklauftemperatur) gedrosselt.

Aus dem Dokument WO 2004/083733 A1 ist ein Verfahren zum Einstellen mehrerer parallel geschalteter, mit einer Kühlflüssigkeit versehener Wärmetauscher bekannt. Für jeden Wärmetauscher wird in recht zeitraubenden Messungen und komplizierten Berechnungen eine seinem Wärmebedarf entsprechende spezifische Grösse ermittelt und mit der spezifischen Grösse der anderen Wärmetauscher verglichen. Der Wärmetauscher mit dem grössten Verbrauch an Wärmeträgermedium wird gebremst, indem seine Durchflussmenge verringert wird. Als eine spezifische Grösse wird das Öffnungsverhältnis der einzelnen Wärmetauscher ermittelt und miteinander verglichen; Wärmetauscher mit den kleinsten Öffnungsverhältnissen werden gebremst, indem deren Durchfluss vermindert bzw. geschlossen wird. Ziel ist das Angleichen des Öffnungsverhältnisses aller Wärmetrauscher bzw. ihrer Steuerventile, und damit das Erreichen eines möglichst gleichen Wärmeverbrauchs aller Wärmetauscher.

Aus dem Dokument DE 10 2006 061 801 A1 ist ein Temperaturregelsystem sowie dessen Verwendung zum Kühl- oder Heizbetrieb bekannt. Zum Kühlen oder Heizen eines Gebäuderaums werden zunächst die Ist-Innentemperatur und die Ist-Feuchte des Raums erfasst. Aus diesen Werten wird eine Minimaltemperatur berechnet, die nicht unterschritten werden soll. Anhand einer berechneten Vorlaufminimaltemperatur wird eine Soll-Vorlauftemperatur vorgegeben und eine Mischeinrichtung wird zur Regelung der Vorlauftemperatur angesteuert; die Verwendung eines Vorlauftemperaturfühlers stellt dabei den Regelfall dar. Dosierventile werden derart angesteuert, dass die Ist-Temperatur des Temperierfluids der Soll-Vorlauftemperatur schlussendlich der Ist-Raumtemperatur einer vorgegebenen Soll-Raumtemperatur entspricht.

Aus dem Dokument WO 2009/072744 A2 ist eine Vorrichtung bekannt, mit der eine Raumtemperatur in mehreren Räumen an eine Heizumgebung angepasst geregelt wird. Eine von einem Anwender eingegebene Heiztemperatur wird von einer individuellen Raumsteuerung in eine Rücklaufsteuertemperatur umgewandelt und an die Ventilsteuerung übermittelt. Daraufhin steuert die Ventilsteuerung auf Veranlassung der individuellen Raumsteuerung die Heizmenge des Boilers indem sie die Rücklaufsteuertemperatur jedes Raums integriert. Dabei wird die Heizmenge des Boilers auf die Heizmenge geregelt, bei der die höchste Temperatur der Rücklaufsteuertemperatur jedes Raumes, die durch die individuelle Raumsteuerung bestimmt wird, beigehalten wird. Wenn nun der Boiler in Betrieb ist und wenn die aktuelle Rücklaufsteuertemperatur des Boilers höher ist als die benötigte Rücklaufsteuertemperatur jedes Raums, so wird das Steuerventil entsprechend geschlossen, damit das Heizsystem nicht überschiesst. Der Boiler wird so gesteuert, dass er gerade die benötigte Heizenergie bereitstellt, die benötigt wird um die vom Anwender für jeden Raum eingestellte Rücklaufsteuertemperatur aufrecht zu erhalten.

Aus dem Dokument WO 2009/069892 A2 bekannt ist eine Vorrichtung zum Steuern der Temperatur des Heizwassers jedes einzelnen Raumtemperatursteuersystems, welche es ermöglicht ähnliche Temperaturen eines Bodens mit einer Vielzahl von Rohren aufrecht zu erhalten. Rücklauftemperatursensoren detektieren die Rücklauftemperatur an den rückseitigen Anschlusspunkten der Heizleitungen vor dem Boiler für jeden Heizkreis eines Raums und übermitteln die erfasste Rücklauftemperatur an eine individuelle Raumsteuerung. Diese individuelle Raumsteuerung bestimmt, nachdem ein Anwender die gewünschte Raumtemperatur eingegeben hat, die Rücklauftemperatur des Heizwassers. Zudem errechnet die individuelle Raumsteuerung den Bedarf der Wärmemenge indem sie die durch den Anwender gewählte Rücklauftemperatur des Heizwassers mit der über die Rücklauftemperatursensoren erfassten Rücklauftemperatur vergleicht und für jeden Kreis individuell das Öffnen und Schliessen der Heizkontrollventile bestimmt und die bestimmte Werte an die Ventilsteuerung übermittelt

Aus dem Dokument DE 197 16 863 A1 bekannt ist eine Fussbodenheizung mit einer Temperaturregeleinrichtung, der eine empirisch arbeitende Verbrauchserfassung zugeordnet ist, welche die Verbrauchsdaten anhand der Vorlauf- und Rücklauftemperaturen sowie der herrschenden Raumtemperatur herleitet.

Aus dem Dokument DE 10 2006 052 124 A1 bekannt ist ein Abgleichsystem für eine Fussbodentemperierungs-Anordnung mit mindestens zwei Temperierkreisen, von denen jeder eine in einem Fussboden oder in einer Deckenwand verlegte Wärmeträgerleitung mit einem Vorlauf und einem Rücklauf aufweist. Zum Vereinfachen des Verteilens der Wärmleistung auf einzelne Heizkreise ist vorgesehen, dass an jedem Rücklauf ein Rücklauftemperaturregler mit einem die Temperatur im jeweiligen Rücklauf erfassenden Temperatursensor angeordnet ist, und dass alle Rücklauftemperaturregler ein gleiches Temperatursteuerverhalten aufweisen. Der Rücklauftemperaturregler sorgt dafür, dass das rückströmende Wärmträgermedium auf einer vorbestimmten Temperatur gehalten wird.

Aus dem Dokument WO 2009/063407 A1 ist das Steuern einer Heizung/Kühlung unterhalb einer Oberfläche durch das Bereitstellen von zwei Kreisen eines Heiz/KühlSystems bekannt, wobei während des Arbeitszyklus des Systems der Fluss hoch und ausserhalb des Arbeitszyklus des Systems der Fluss gestoppt ist. Die Raumtemperatur wird anhand der Steuerung der prozentualen Anteile der Arbeitszyklen geregelt, wobei diese prozentualen Anteile auf der Basis des Wärmebedürfnisses der Räume bestimmt werden. Unterschiedliche Kreise werden gesteuert, indem die Arbeitszyklen zu unterschiedlichen Zeiten gestartet werden.

Das Dokument WO 2010/095089 A2 beschreibt ein Heizsystem, bei welchem von einer Haupt-Vorlaufleitung aus einzelne Heizkreisläufe in verschiedene Räume führen. Durch eine zentrale Steuereinheit wird das gleichzeitige Schliessen der Ventil-Stellglieder in verschiedenen Heizkreisläufen mittels gewisser Zeitverzögerungen verhindert, um abrupte Druckstösse im Gesamt-Kreislaufsystem zu vermeiden.

Es ist die Aufgabe der vorliegenden Erfindung, ein alternatives Temperierverfahren sowie ein zur Durchführung dieses Verfahrens geeignetes Temperiersystem zum Heizen oder Kühlen eines Bauteils vorzuschlagen, welche die wesentlichen, aus dem Stand der Technik bekannten Nachteile eliminieren oder zumindest minimieren. Es wird insbesondere bevorzugt, dass dieses Temperierverfahren einfach ist und trotzdem eine deutlich gleichmässigere Energieabgabe an Bauteile oder eine deutlich gleichmässigere Energieaufnahme von Bauteilen ermöglicht und damit den Komfort und die Energieeffizienz steigert.

Zum Zweck einer besseren Übersichtlichkeit wird im Folgenden im Zusammenhang mit Temperierverfahren bzw. Temperiersystemen vorwiegend von Heizverfahren bzw. Heizsystemen gesprochen; sinngemäss gelten diese Ausführungen aber auch für Kühlverfahren bzw. Kühlsysteme.

Gemäss einem ersten Aspekt wird diese Aufgabe mit einem einfacheren Temperierverfahren gelöst, das die Merkmale des Anspruchs 1 umfasst.

Gemäss einem zweiten Aspekt wird diese Aufgabe mit einem verbesserten Temperierverfahren gelöst, das die Kombination der Merkmale der Ansprüche 1 und 7 umfasst.

Gemäss einem dritten Aspekt wird diese Aufgabe mit einem Temperiersystem zur Durchführung dieser Temperierverfahren gelöst, das die Merkmale des Anspruchs 18 umfasst.

Weitere bevorzugte und erfinderische Merkmale ergeben sich aus den jeweils abhängigen Ansprüchen.

Eine bevorzugte Ausführungsform der vorliegenden Erfindung wird nun anhand von schematischen Zeichnungen und Diagrammen näher erläutert, ohne dass diese Zeichnungen und Diagramme den Umfang der vorliegenden Erfindung begrenzen sollen. Dabei zeigen:
- Fig. 1: ein Funktionsschema einer zum Durchführen des erfindungsgemässen Verfahrens geeignete Vorrichtung;
- Fig. 2: Messkurven und Schaltdiagramme, die beim Durchführen des erfindungsgemässen Verfahrens mit einer gemäss Fig. 1 erstellten Vorrichtung erhalten wurden.

Vorteile des erfindungsgemässen Verfahrens umfassen:
- eine optimale Wärmeverteilung der temperierten Flächen;
- eine Verbesserung der Behaglichkeit in den beheizten Räumen;
- einen vollständig automatischen Abgleich und damit eine automatische Optimierung des Heiz- oder Kühlsystems;
- auf Vorlauftemperaturfühler kann verzichtet werden, was das Verfahren vereinfacht;
- eine höhere Energieeffizienz der eingesetzten Heiz- oder Kühlsysteme durch das erfolgreiche Verhindern des Überschwingens dieser Systeme in Bezug auf eine gewählte SOLL-Temperatur;
- mit einem Flusswert des Temperierfluids von bis zu ca. 18 l/min können bei vollständig geöffneten Ventilen Schnellaufheizungen bzw. Schnellabkühlungen vollzogen werden, weil keine TOP-Meter den Fluss des Temperierfluids reduzieren.

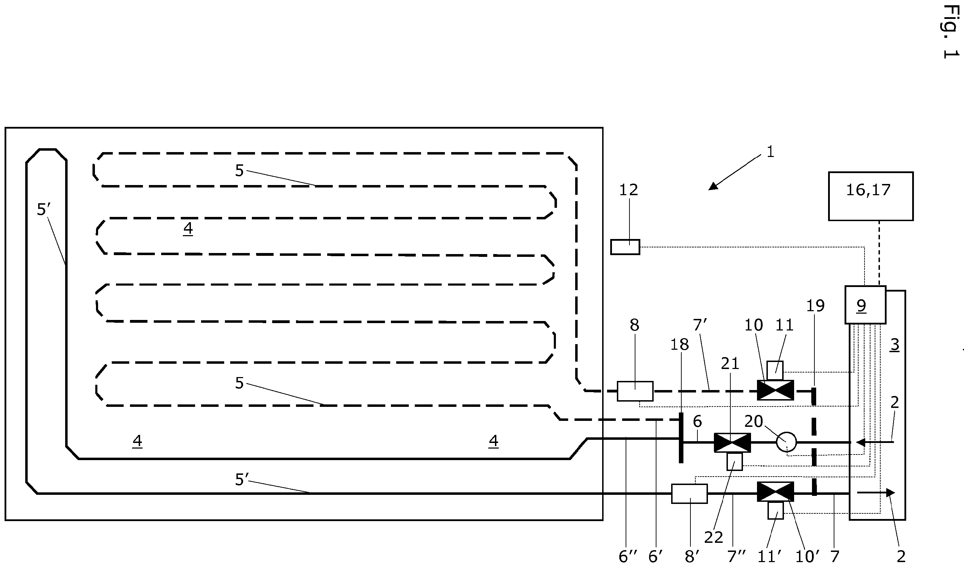

Im Folgenden wird das erfindungsgemässe Verfahren und eine bevorzugte, zur Durchführung des erfindungsgemässen Verfahrens geeignete Vorrichtung mit Bezug auf die Figur 1 im Detail vorgestellt. Zum Durchführen dieses Verfahrens zum Temperieren eines Bauteils wird ein Temperiersystem 1 bereitgestellt, das umfasst:
a) eine zum Heizen oder Kühlen eines Temperierfluids 2 ausgebildete Temperiervorrichtung 3;
b) mindestens zwei zum Durchleiten des Temperierfluids 2 durch ein zu temperierendes Bauteil 4 ausgebildete Temperieranordnungen 5,5', die über individuelle Vorlaufleitungsteile 6',6" und über individuelle Rücklaufleitungsteile 7',7" mit der Temperiervorrichtung 3 verbunden sind, wobei jeder der individuellen Rücklaufleitungsteile 7',7" einen eigenen Rücklauftemperaturfühler 8,8' zum Messen der individuellen Rücklauftemperatur des Temperierfluids 2 aus der entsprechenden Temperieranordnung 5,5' umfasst;
c) keinen Vorlauftemperaturfühler; und
d) eine Steuerung 9, welche in den individuellen Vorlaufleitungsteilen 6',6" oder Rücklaufleitungsteilen 7',7" angeordnete Ventile 10,10' mit Stellgliedern 11,11' umfasst, die zum Einstellen eines Öffnungsgrades des jeweils zugeordneten Ventils 10,10' ausgebildet sind, wobei die Steuerung 9 zum Ansteuern der Stellglieder 11,11' und zum Ablesen der Rücklauftemperaturfühler 8,8' ausgebildet ist und einen Raumtemperaturfühler 12 zum Feststellen und Melden einer IST-Temperatur 13 in einer unmittelbaren Umgebung des Bauteils 4 umfasst.

Das Verfahren zum Temperieren eines Bauteils 4, bei welchem ein derartiges Temperiersystem 1 bereitgestellt wird, ist dadurch gekennzeichnet, dass:
i) auf das Verwenden von Vorlauftemperaturfühlern verzichtet wird;
ii) eine SOLL-Temperatur 14 für die unmittelbare Umgebung des Bauteils 4 vorbestimmt wird;
iii) ein die vorbestimmte SOLL-Temperatur 14 nicht umfassendes erstes Temperaturfenster 15 als erste positive Temperaturdifferenz (ΔT₁) für ein Kühlen des Bauteils 4 oder als erste negative Temperaturdifferenz (ΔT₂) für ein Heizen des Bauteils 4 zu der vorbestimmten SOLL-Temperatur 14 definiert und in der Steuerung 9 implementiert wird; und
iv) die Steuerung 9, bei einem durch eine Temperaturänderung bedingten Eintritt der vom Raumtemperaturfühler 12 gemeldeten IST-Temperatur 13 in das erste Temperaturfenster 15, dem Stellglied 11 derjenigen Temperieranordnung 5, deren Rücklauftemperatur den Rücklauftemperaturen der anderen Temperieranordnungen 5' in der Richtung der aktuellen Temperaturänderung vorangeht, den Befehl zum Schliessen des Ventils 10 für eine erste Schliesszeit (t₁) erteilt, wobei die Steuerung 9 den Stellgliedern 11' der anderen Temperieranordnungen 5' den Befehl erteilt während der ersten Schliesszeit (t₁) die Ventile 10' offen zu halten.

Beschrieben wird im Folgenden die Verwendungen eines Temperatursystems 1 mit (n = 2) Temperiervorrichtungen 3.

Unter dem Ausdruck "Bauteil" ist beispielsweise eine Bodenplatte, eine Wand, eine Deckenplatte oder auch eine freistehende Platte bzw. eine Kombination solcher Bauelemente in einem Wohnraum, Arbeitsraum, Lagerraum, Kühlraum und dergleichen zu verstehen. Ein "Temperierfluid" ist eine Flüssigkeit, ein Gas oder ein Flüssigkeits/Gas-Gemisch, die bzw. das geeignet ist Wärmeenergie einem Bauteil zuzuführen oder von einem Bauteil abzuführen. Eine "Temperiervorrichtung" kann eine Heizung, eine Kühlung oder auch eine Klimaanlage sein, mit der die Temperatur eines geeigneten Temperierfluids beeinflusst wird. "Temperieranordnungen" sind Vorrichtungen (wie. z.B. Kühlrohr- oder Heizrohr-Schlangen, die beispielsweise in einem Bauteil eingebaut sind und von einem Temperierfluid durchspült sind) zum Austausch von Wärmeenergie zwischen einem Temperierfluid und einem Bauteil.

Die "SOLL-Temperatur für die unmittelbare Umgebung eines Bauteils" kann die gewünschte Raumtemperatur in einem Wohnraum, Arbeitsraum, Lagerraum, Kühlraum und dergleichen sein. Das "Temperaturfenster" ist so definiert, dass es sowohl für Heizsysteme als auch für Kühlsysteme verwendet werden kann; dabei umfasst das Temperaturfenster die vorbestimmte SOLL-Temperatur 14 nicht und es ist unterteilt in eine erste positive Temperaturdifferenz (ΔT₁), die oberhalb der SOLL-Temperatur liegt und in eine erste negative Temperaturdifferenz (ΔT₂) die unterhalb der SOLL-Temperatur liegt. Die "IST-Temperatur" ist die vom Raumtemperaturfühler gemessene, aktuelle Raumtemperatur.

In den Fällen, in denen die IST-Temperatur durch eine Temperaturänderung bedingt in das erste Temperaturfenster 15 eintritt, ermittelt die Steuerung abhängig davon ob es sich bei dem vorliegenden Temperiersystem um ein Heiz- oder Kühlsystem handelt, welcher Heiz- oder Kühlkreislauf im Vergleich mit den anderen Heiz- oder Kühlkreisläufen eine wärmere bzw. kältere Rücklauftemperatur aufweist. In der Praxis ergeben sich typischerweise die folgenden Szenarien:
A) Die IST-Temperatur ist deutlich (z.B. um mehr als 2 °C) unter der SOLL-Temperatur. Ein Heizsystem beginnt das Temperierfluid aufzuheizen und über die Temperieranordnungen im Bauteil zu verteilen, das sich folglich erwärmt. Die aktuelle Temperaturänderung ist somit eine steigende Temperatur und die Temperieranordnung, deren Rücklauftemperatur den Rücklauftemperaturen der anderen Temperieranordnungen in der Richtung der aktuellen Temperaturänderung vorangeht, ist somit der Heizkreis mit der höchsten Rücklauftemperatur. Das Heizsystem wird in diesem Fall gemäss der vorliegenden Erfindung angesteuert (vgl. Ansprüche 1 bis 3).
B) Die IST-Temperatur ist nahe oder entspricht der SOLL-Temperatur. Ein Heizsystem wird in diesem Fall gemäss der vorliegenden Erfindung angesteuert (vgl. Anspruch 4).
C) Die IST-Temperatur ist deutlich (z.B. um mehr als 2 °C) über der SOLL-Temperatur. Ein Heizsystem wird in diesem Fall in der Leistung reduziert (vgl. Anspruch 5) oder ganz abgeschaltet.
D) Die IST-Temperatur ist deutlich (z.B. um mehr als 2 °C) über der SOLL-Temperatur. Ein Kühlsystem beginnt das Temperierfluid abzukühlen und über die Temperieranordnungen im Bauteil zu verteilen. Die aktuelle Temperaturänderung ist somit eine fallende Temperatur und die Temperieranordnung, deren Rücklauftemperatur den Rücklauftemperaturen der anderen Temperieranordnungen in der Richtung der aktuellen Temperaturänderung vorangeht, ist somit der Kühlkreis mit der niedrigsten Rücklauftemperatur. Das Kühlsystem wird in diesem Fall gemäss der vorliegenden Erfindung angesteuert.
E) Die IST-Temperatur ist nahe oder entspricht der SOLL-Temperatur. Ein Kühlsystem wird in diesem Fall gemäss der vorliegenden Erfindung angesteuert.
F) Die IST-Temperatur ist deutlich (z.B. um mehr als 2 °C) unter der SOLL-Temperatur. Ein Kühlsystem wird in diesem Fall in der Leistung reduziert oder ganz abgeschaltet.

Erfindungsgemäss wird also beim Eintritt der IST-Temperatur in ein vorbestimmtes Temperaturfenster ermittelt, welche der Temperieranordnungen der anderen vorauseilt. Dieses Vorauseilen gründet darin, dass diese Temperieranordnung mit dem Bauteil nur relativ wenig Wärmeenergie austauschen muss und deshalb einen geringeren Temperaturunterschied zu der allen Temperieranordnungen eines Systems gemeinsamen Vorlauftemperatur erleidet. Diese vorauseilende Temperieranordnung wird erfindungsgemäss in ihrer Wirkung gebremst, indem die Steuerung dem entsprechenden Stellglied den Befehl erteilt, das Ventil für die vorauseilende Temperieranordnung zu schliessen. Es ist weiterhin bezeichnend für die vorliegende Erfindung, dass die andere Temperieranordnung, die offensichtlich eine grössere Wärmemenge auszutauschen hat ungebremst verbleibt, d.h. deren Ventil bleibt geöffnet. Ein weiteres Kennzeichen der vorliegenden Erfindung liegt darin, dass das Ventil für die vorauseilende Temperieranordnung nur für eine bestimmte Zeit, nämlich eine Schliesszeit t₁ geschlossen wird.

In der Folge wird im Sinne einer besseren Übersichtlichkeit der Beschreibung immer angenommen, dass die Temperiervorrichtung 3 zum Heizen des Temperierfluids 2 ausgebildet ist, dass es sich mit anderen Worten um ein Heizsystem (z.B. für eine Bodenheizung) handelt. Hinweise auf sinngemässe Anwendungen des erfindungsgemässen Verfahrens für Kühlsysteme werden an passender Stelle eingefügt und ergeben sich für den Fachmann überdies aus der nun folgenden Beschreibung.

Die Figur 1 zeigt ein Temperiersystem 1, das zum Durchführen der erfindungsgemässen Temperierverfahren speziell geeignet ist, umfasst:
a) eine zum Heizen oder Kühlen eines Temperierfluids 2 ausgebildete Temperiervorrichtung 3;
b) mindestens zwei zum Durchleiten des Temperierfluids 2 durch ein zu temperierendes Bauteil 4 ausgebildete Temperieranordnungen 5,5', die über individuelle Vorlaufleitungsteile 6',6" und über individuelle Rücklaufleitungsteile 7',7" mit der Temperiervorrichtung 3 verbunden sind, wobei jeder der individuellen Rücklaufleitungsteile 7',7" einen eigenen Rücklauftemperaturfühler 8,8' zum Messen der individuellen Rücklauftemperatur des Temperierfluids 2 aus der entsprechenden Temperieranordnung 5,5' umfasst; und
c) eine Steuerung 9, welche in den individuellen Vorlaufleitungsteilen 6',6" oder Rücklaufleitungsteilen 7',7" angeordnete Ventile 10,10' mit Stellgliedern 11,11' umfasst, die zum Einstellen eines Öffnungsgrades des jeweils zugeordneten Ventils 10,10' ausgebildet sind, wobei die Steuerung 9 zum Ansteuern der Stellglieder 11,11' und zum Ablesen der Rücklauftemperaturfühler 8,8' ausgebildet ist und einen Raumtemperaturfühler 12 zum Feststellen und Melden einer IST-Temperatur 13 in einer unmittelbaren Umgebung des Bauteils 4 umfasst.

Ein derartiges Temperiersystem 1 ist in der Figur 1 schematisch als Funktionsschema dargestellt. Ein Temperierfluid 2 durchströmt eine als Heizung ausgebildete Temperiervorrichtung 3 und gelangt über eine gemeinsame Vorlaufteilleitung 6 zu einem Vorlaufverteilerbalken18. Dort wird das Temperierfluid 2 in zwei individuelle Vorlaufleitungsteile 6',6" eingeleitet und gelangt so in die beiden Temperieranordnungen 5,5', die als Heizschlangen in einem als Bodenplatte ausgebildeten Bauteil 4 angeordnet sind. Über je einen individuellen Rücklaufleitungsteil 7',7" gelangt das Temperierfluid 2 nach intensivem Wärmeaustausch mit dem Bauteil 4 in den Rücklaufverteilerbalken 19. Zwischen dem Austritt der individuellen Rücklaufleitungsteile 7',7" und dem Rücklaufverteilerbalken 19, vorzugsweise jedoch möglichst nahe am Bauteil 4, ist in jedem der Rücklaufleitungsteile 7',7" ein Rücklauftemperaturfühler 8,8' zum Messen der Rücklauftemperatur des aus der entsprechenden Temperieranordnung 5,5' ankommenden Temperierfluids 2 angeordnet. Besonders bevorzugt wird die Anordnung der Rücklauftemperaturfühler 8,8' und der Ventile 10,10' mit ihren Stellgliedern 11,11' an bzw. in den individuellen Rücklaufleitungsteilen 7',7" in einer unmittelbaren Nähe zum Rücklaufverteilerbalken 19, weil dort vorzugsweise auch die Steuereinheit 9 angeordnet ist. Einerseits erleichtert diese Anordnung die Zugänglichkeit und den Service für alle diese Einrichtungen, andererseits erlaubt diese Anordnung das Verlegen von besonders kurzen elektrischen Verbindungen zwischen diesen Einrichtungen. Ein Vorlauftemperaturfühler ist nicht vorhanden.

Der Rücklaufverteilerbalken 19 ist mit der Temperiervorrichtung 3 über eine gemeinsame Rücklaufteilleitung 7 verbunden. Überwacht und gesteuert, bzw. geregelt wird das Temperiersystem 1 mit der Steuerung 9, die hier als elektronische Steuerung ausgebildet ist und einen Rechner 17 sowie einen Datenspeicher 16 umfasst. In diesem Beispiel ist in je einem der beiden Rücklaufleitungsteile 7',7" ein Ventil 10,10' eingebaut und mit einem dazu gehörenden Stellglied 11,11' ausgestattet. In der gemeinsamen Vorlaufteilleitung 6 ist ein Schliesseventil 21 mit einem dazu gehörenden Stellglied 22 sowie eine Umwälzpumpe 20 angeordnet. Ein Raumtemperaturfühler 12 misst die IST-Temperatur 13 im Raum über der Bodenheizung. Alle Messelemente 8,8';12, Schaltelemente 11,11';20,22 und Peripheriegeräte 16,17 sind mit der Steuerung 9 operativ verbunden (vgl. gestrichelte Linien). Die Steuerung 9 ist hier in die Heizung (Temperiervorrichtung 3) eingebaut, könnte aber auch ausserhalb der Heizung angeordnet sein. Ebenso könnte vorgesehen sein, den Rechner 17 und den Datenspeicher 16 in die Steuerung zu integrieren.

Bevorzugt wird, dass die Steuerung 9 einen Datenspeicher 16 für das Abspeichern von Parametern umfasst, wobei die Parameter ausgewählt sind aus einer Gruppe, die zumindest eine SOLL-Temperatur 14, ein erstes Temperaturfenster 15, ein zweites Temperaturfenster 23, eine erste, zweite, dritte bis n-te Schliesszeit (t₁,t₂,t₃,...,tₙ) und eine erste, zweite, dritte bis m-te Offenzeit (t₄,t₅,t₆,...,tₘ) umfasst. Bevorzugt wird weiterhin, dass die Steuerung 9 einen Rechner 17 zum Abrufen und Verarbeiten der Parameter aus dem Datenspeicher 16 und zum Kontrollieren des Temperiersystems 1 umfasst.

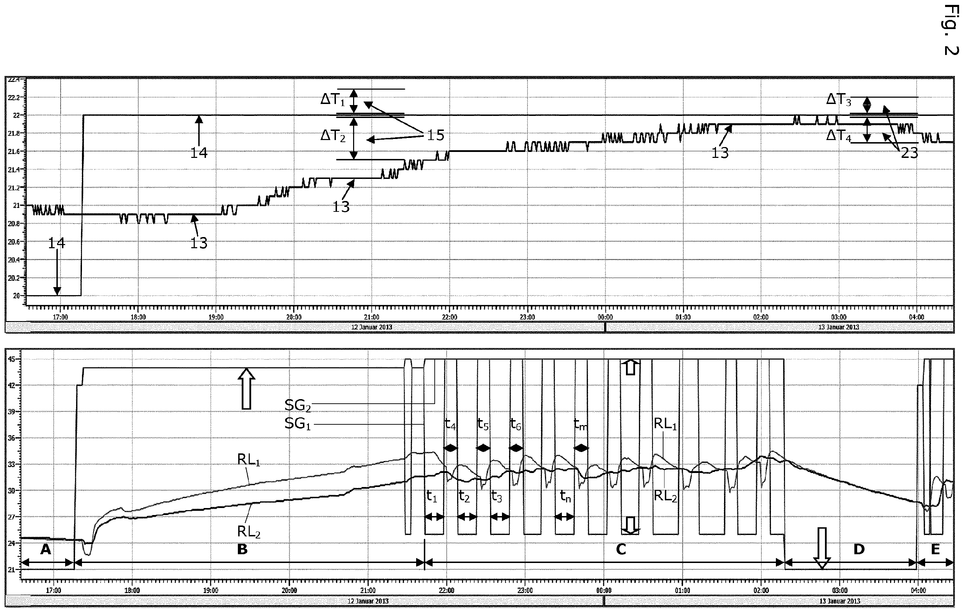

Die Figur 2 zeigt Messkurven und Schaltdiagramme, die beim Durchführen des erfindungsgemässen Verfahrens mit einer gemäss Fig. 1 erstellten Vorrichtung erhalten wurden. Tatsächlich dargestellt ist das Resultat eines an einem Wohnraumboden mit zwei Heizkreisen durchgeführten Temperierverfahrens:
- Der obere Graph zeigt die aktuelle IST-Temperatur 13 und die gewählte SOLL-Temperatur 14 des Wohnraums. Dabei ist auf der Abszisse die Zeit in Stunden (ca. 16.30 bis ca. 04.30 Uhr des nächsten Tages) und auf der Ordinate die Raumtemperatur in Zehntelgraden Celsius dargestellt.
- Der untere Graph zeigt die Rücklauftemperaturen RL₁,RL₂ der beiden Heizkreise 5,5', so wie diese von den beiden Rücklauftemperaturfühlern 8,8' gemeldet wurden. Zudem sind die Schaltsignale dargestellt, welche die Steuerung 9 an die beiden Stellglieder 11,11' zum Öffnen oder Schliessen der Ventile 10,10' übermittelte (lange Pfeile bezeichnen Öffnen oder Schliessen beider Ventile 10,10'; kurze Pfeile bezeichnen Öffnen oder Schliessen eines der Ventile 10,10'). Dabei ist auf der Abszisse die Zeit in Stunden (ca. 16.30 bis ca. 04.30 Uhr des nächsten Tages) und auf der Ordinate die Temperatur in Schritten von 3 °C dargestellt. Der untere Graph zeigt die Stellgliedsignale SG₁,SG₂ für die Stellglieder 11,11' der beiden Ventile 10,10'; wobei die unterschiedlichen Zeitpunkte des Veränderns dieser Signale (1/0 bzw. 0/1) belegen, dass jeder der beiden Heizkreise bzw. jede der beiden Temperieranordnungen 5,5' autonom, d.h. unabhängig vom anderen Heizkreis gesteuert wurde.
   - Um 17.00 Uhr war die Regelung bei Temperaturschwankungen von maximal 0.1 °C im Gleichgewicht, beide Ventile 10,10' waren geschlossen (Situation **A**).
   - Um ca. 17.15 Uhr wurde die SOLL-Temperatur 14 von 20 °C auf 22 °C erhöht; mit einer kurzen Verzögerung öffneten beide Ventile 10,10' und blieben bis ca. 21.30 Uhr offen (Situation **B**). Um ca. 21.30 Uhr trat die IST-Temperatur 13 in das erste Temperaturfenster 15, insbesondere in die erste negative Temperaturdifferenz ΔT₂ (hier SOLL-Temperatur - 0.5 °C) dieses Temperaturfenster 15 ein, sofort befahl die Steuerung 9 dem Stellglied 11 das Ventil 10 zu schliessen. Weil aber die IST-Temperatur 12 gleich anschliessend um 0.1 °C fiel, wurde das Ventil 10 wieder geöffnet.
   - Um ca. 21.45 Uhr befahl die Steuerung 9 dem Stellglied 11 wieder, das Ventil 10 zu schliessen und während einer ersten Schliesszeit t₁ geschlossen zu halten, gleichzeitig wies die Steuerung 9 das Stellglied 11' an das Ventil 10' offen zu halten. Die Schliesszeit t₁ betrug hier ca. 15 Minuten. Anschliessend befahl die Steuerung 9 dem Stellglied 11, das Ventil 10 zu öffnen und während einer ersten Offenzeit t₄ offen zu halten, gleichzeitig wies die Steuerung 9 das Stellglied 11' an das Ventil 10' offen zu halten. Die Offenzeit t₄ betrug hier ca. 10 Minuten. Diese Regelung (d.h. Bremsung der Heizwirkung der Heizschlange 5 mit der vorauseilenden Rücklauftemperatur RL₁) wurde so lange aufrechterhalten bzw. die Regelzyklen (t₁,t₂,t₃,...,tₙ) bzw. (t₄,t₅,t₆,...,tₘ) wurden so oft wiederholt (Situation **C**) bis die SOLL-Temperatur 14 von der IST-Temperatur 13 um ca. 02.15 Uhr erstmals erreicht wurde. Vor dem Erreichen der SOLL-Temperatur 14 trat die IST-Temperatur in eine zweite negative Temperaturdifferenz ΔT₄ (hier SOLL-Temperatur - 0.3 °C) eines zweiten Temperaturfensters 23 ein.
      Hier ist zu bemerken, dass die Steuerung 9 sehr schnelle Temperaturmessungen bereitstellt (beispielsweise 1 Messung pro 100 Millisekunden), dass die Temperaturaufzeichnung zum Zecke der besseren Übersichtlichkeit der Darstellung nur 1 mal pro Minute erfolgte, so dass der den Vorgang um ca. 02.15 Uhr auslösende Messpunkt offensichtlich von der Temperaturaufzeichnung gerade nicht erfasst wurde.
   - Um ca. 02.15 Uhr wurde somit die erste negative Temperaturdifferenz ΔT₂ und auch die zweite negative Temperaturdifferenz ΔT₄ überschritten, was die Steuerung 9 veranlasste beiden Stellgliedern 11,11' zu befehlen, das jeweilige Ventil 10,10' zu schliessen (Situation **D**).
   - Um ca. 04.00 Uhr erreicht die IST-Temperatur das untere Limit der zweiten negativen Temperaturdifferenz ΔT₄ von 21.7 °C, worauf die Steuerung die Regelung (d.h. Bremsung der Heizwirkung der Heizschlange 5 mit der vorauseilenden Rücklauftemperatur RL₁) wieder aufnahm (Situation **E**).

Die gemessene Aussentemperatur betrug um Mitternacht (00.00 Uhr) -6 °C.

Es darf festgestellt werden, dass der automatische Abgleich der beiden Heizkreise erfolgte, ohne dass ein Überschwingen der IST-Temperatur über die SOLL-Temperatur festgestellt werden musste. Durch ein Verringern des ersten Temperaturfensters 15 und oder durch ein Einführen eines zweiten Temperaturfensters 23 kann das Halten einer stabilen, der SOLL-Temperatur 14 angenäherten IST-Temperatur 13 noch verbessert und wegen der noch geringeren Temperaturschwankungen die Energieeffizienz des eingesetzten Heiz- oder Kühlsystems weiter verbessert werden. Die beiden Rücklauftemperaturen (RL₁,RL₂) bewegten sich in einem Bereich von 22.5 °C bis 34.5 °C.

Es wird somit bevorzugt, dass, falls die Temperiervorrichtung 3 zum Heizen des Temperierfluids 2 ausgebildet ist, und falls (z.B. beim Einschalten des Temperiersystems 1) die vom Raumtemperaturfühler 12 gemeldete IST-Temperatur 13 deutlich (z.B. um mehr als 2 °C) unterhalb der ersten negativen Temperaturdifferenz (ΔT₂) liegt, die Steuerung 9 den Stellgliedern 11',11 aller Temperieranordnungen 5',5 den Befehl die Ventile 10',10 zu öffnen erteilt (vgl. auch Fig. 2: Wechsel Situation **A/B** beim Wählen und Implementieren einer höheren SOLL-Temperatur und Situation **B**). Für Kühlsysteme gilt sinngemäss, dass die Steuerung 9 den Stellgliedern 11',11 aller Temperieranordnungen 5',5 den Befehl erteilt die Ventile 10',10 zu öffnen, wenn die vom Raumtemperaturfühler 12 gemeldete IST-Temperatur 13 deutlich (z.B. um mehr als 2 °C) oberhalb der ersten positiven Temperaturdifferenz (ΔT₁) liegt.

Falls die Temperiervorrichtung 3 also zum Heizen des Temperierfluids 2 ausgebildet ist, und falls die vom Raumtemperaturfühler 12 gemeldete IST-Temperatur 13 noch innerhalb der ersten negativen Temperaturdifferenz (ΔT₂) liegt, wird ein Temperierverfahren bevorzugt, bei dem die Steuerung 9 nach Ablauf der ersten Schliesszeit (t₁) dem Stellglied 11,11' derjenigen Temperieranordnung 5,5', deren Rücklauftemperatur am höchsten ist, den Befehl zum Schliessen des Ventils 10,10' für eine zweite Schliesszeit (t₂) erteilt. Praktisch gleichzeitig erteilt dabei die Steuerung 9 den Stellgliedern 11',11 der anderen Temperieranordnungen 5',5 den Befehl während der zweiten Schliesszeit (t₂) die Ventile 10',10 offen zu halten. Bevorzugt wird anschliessend, dass die Steuerung 9 nach Ablauf der zweiten Schliesszeit (t₂) dem Stellglied 11,11' derjenigen Temperieranordnung 5,5', deren Rücklauftemperatur am höchsten ist, den Befehl zum Schliessen des Ventils 10,10' für eine dritte Schliesszeit (t₃) erteilt, wobei die Steuerung 9 den Stellgliedern 11',11 der anderen Temperieranordnungen 5',5 den Befehl erteilt während der dritten Schliesszeit (t₃) die Ventile 10',10 offen zu halten.

Für Kühlsysteme gilt sinngemäss, dass die Steuerung 9 nach Ablauf der ersten Schliesszeit (t₁), falls die vom Raumtemperaturfühler 12 gemeldete IST-Temperatur noch innerhalb der ersten positiven Temperaturdifferenz (ΔT₁) liegt, dem Stellglied 11,11' derjenigen Temperieranordnung 5,5', deren Rücklauftemperatur am tiefsten ist, den Befehl zum Schliessen des Ventils 10,10' für eine zweite Schliesszeit (t₂) erteilt, wobei die die Steuerung 9 den Stellgliedern 11',11 der anderen Temperieranordnungen 5',5 den Befehl erteilt während der zweiten Schliesszeit (t₂) die Ventile 10',10 offen zu halten. Bevorzugt wird anschliessend, dass die Steuerung 9 nach Ablauf der zweiten Schliesszeit (t₂) dem Stellglied 11,11' derjenigen Temperieranordnung 5,5', deren Rücklauftemperatur am tiefsten ist, den Befehl zum Schliessen des Ventils 10,10' für eine dritte Schliesszeit (t₃) erteilt, wobei die Steuerung 9 den Stellgliedern 11',11 der anderen Temperieranordnungen 5',5 den Befehl erteilt während der dritten Schliesszeit (t₃) die Ventile 10',10 offen zu halten.

Falls die Temperiervorrichtung 3 zum Heizen des Temperierfluids 2 ausgebildet ist, wird bevorzugt, dass die Steuerung 9, falls die vom Raumtemperaturfühler 12 gemeldete IST-Temperatur 13 nach Ablauf der ersten, zweiten oder dritten Schliesszeit (t₁,t₂,t₃) höher ist als die erste negative Temperaturdifferenz (ΔT₂), den Stellgliedern 11,11' aller Temperaturanordnungen (5,5') den Befehl erteilt die Ventile 10,10' zu schliessen. Entsprechend sollen bei einem Kühlsystem, falls die vom Raumtemperaturfühler 12 gemeldete IST-Temperatur 13 nach Ablauf der ersten, zweiten oder dritten Schliesszeit (t₁,t₂,t₃) tiefer ist als die erste positive Temperaturdifferenz (ΔT₁), alle Ventile 10,10' geschlossen werden.

Die bisher beschriebene, bevorzugte einfachere Variante des erfindungsgemässen Verfahrens hat also hauptsächlich zum Ziel, immer nur gerade diejenige Temperieranordnung, die mit dem Bauteil momentan nur relativ wenig Wärmeenergie austauschen muss in ihrer Wirkung zu bremsen und die andere Temperieranordnung ungebremst weiter laufen zu lassen. Nach Ablauf einer Schliesszeit (t₁,t₂,t₃,...,tₙ) werden die Rücklauftemperaturen der Temperieranordnungen neu bewertet und der Algorithmus wird entsprechend neu gestartet.

Beschrieben und diskutiert wurde bisher ein beispielhaftes Temperiersystem 1 mit zwei Heizkreisen, mit also (n = 2) Temperieranordnungen 5,5'. In diesem einfachen Temperiersystem 1 mit (n = 2) Heizkreisen wird immer diejenige Temperieranordnung 5, deren Rücklauftemperatur der Rücklauftemperatur des anderen Temperieranordnung 5' in Richtung der erwünschten Temperaturänderung vorangeht, durch sporadisches Schliessen ihres Steuerventils 10' gebremst. Das Steuerventil 10' der Temperieranordnung 5', deren Rücklauftemperatur der Rücklauftemperatur des anderen Temperieranordnung 5 in Richtung der erwünschten Temperaturänderung nachläuft, wird in dieser Zeit offen gehalten.

Die vorliegende Erfindung kann auch bei Temperiersystemen 1 mit mehr als zwei Heizkreisen, also mit (n > 2) Temperieranordnungen 5,5' angewendet werden. Dabei kann vorgesehen werden, dass nicht nur diejenige Temperieranordnung 5 deren Rücklauftemperatur der Rücklauftemperatur aller anderen Temperieranordnungen 5' in Richtung der erwünschten Temperaturänderung vorangeht, gebremst wird. Vielmehr kann vorgesehen sein, dass mehr als eine Temperieranordnung 5 bis maximal alle bis auf eine Temperieranordnung 5', also [1 bis (n-1)] Temperieranordnungen 5 durch sporadisches Schliessen ihrer Steuerventile 10 gebremst werden. In dieser Zeit werden sinngemäss die Steuerventile 10' von [1 bis (n-1)] Temperieranordnun**g**en 5' offen gehalten. Bevorzugt ist die Anzahl von n Temperieranordnungen 5,5' ausgewählt aus einer Gruppe die n = 2, n = 3, n = 4, und n = 5 umfasst.

Als praktisches Beispiel für eine Bodenheizung sei hier ein Temperiersystem 1 mit n = 3 (also mit n > 2) Temperieranordnungen 5,5' kurz beschrieben, wobei dieses Temperiersystem 1 als Temperieranordnungen 5,5' die Heizkreise **N**, **O** und **P** umfasst. Ein erster Heizkreis **N** wird als Temperieranordnung 5 und die beiden weiteren Heizkreise **O** und **P** werden als Temperieranordnungen 5' bezeichnet. Erfindungsgemäss wird nun grundsätzlich zwischen drei Fällen unterschieden, in denen als Regel gelten soll:
1) Falls die Rücklauftemperatur des Heizkreises **N** den beiden Heizkreisen **O** und **P** um jeweils mindestens 0.1 °C vorangeht, wird während einer ersten Schliesszeit (t₁) nur der Heizkreis **N** gebremst und die beiden anderen Heizkreise **O** und P bleiben während der ersten Schliesszeit (t₁) offen.
   Dazu werden von der Steuerung 9 die Rücklauftemperaturen der drei Heizkreise der Reihe nach abgefragt, wobei zuerst die Rücklauftemperatur von **N** als "höchste" angenommen und gefragt wird, ob die Rücklauftemperatur von **O** höher ist als die Rücklauftemperatur von **N**, und ob die Rücklauftemperatur von **P** höher ist als die Rücklauftemperatur von **O**. Falls eine der beiden Fragen mit "ja" beantwortet wird, wird der jeweilige Heizkreis **O** oder **P** gebremst. Falls diese beiden Fragen mit "nein" beantwortet werden, wird der Heizkreis **N** gebremst.
2) Falls die Rücklauftemperaturen der beiden Heizkreise **N** und **O** dem Heizkreis **P** um jeweils mindestens 0.1 °C vorangehen, werden während einer ersten Schliesszeit (t₁) die beiden Heizkreise **N** und **O** gebremst und der andere Heizkreis **P** bleibt während der ersten Schliesszeit (t₁) offen.
   Dazu werden von der Steuerung 9 die Rücklauftemperaturen der drei Heizkreise der Reihe nach abgefragt, wobei zuerst die Rücklauftemperatur von **N** als "tiefste" angenommen und gefragt wird, ob die Rücklauftemperatur von **O** tiefer ist als die Rücklauftemperatur von **N**, und ob die Rücklauftemperatur von **P** tiefer ist als die Rücklauftemperatur von **O**. Falls eine der beiden Fragen mit "ja" beantwortet wird, werden die beiden jeweils anderen Heizkreise **N** und **P** oder **N** und **O** gebremst. Falls diese beiden Fragen mit "nein" beantwortet werden, wird der Heizkreis **N** gebremst.
   Das Abfragen der Rücklauftemperaturen der Heizkreise **N**, **O** und **P** erfolgt zyklisch und wird praktisch beliebig wiederholt. Die entscheidenden Mindestunterschiede der Rücklauftemperaturen von 0.1 °C haben sich in der Praxis bewährt; geringfügig grössere oder auch kleinere Mindestunterschiede könnten ebenfalls verwendet werden.
3) Falls die IST-Temperatur 13 um mehr als 0.3 °C von der Soll-Temperatur 14 abweicht, wird gemäss Regel 1) verfahren, und falls die IST-Temperatur 13 um 0.3 °C oder weniger von der Soll-Temperatur 14 abweicht wird gemäss Regel 2) verfahren.
   Der entscheidende Mindestunterschied zwischen IST-Temperatur 13 und Soll-Temperatur 14 von 0.3 °C hat sich in der Praxis bewährt; geringfügig grössere oder kleinere Mindestunterschiede könnten ebenfalls verwendet werden. Dieses gemischte Vorgehen mit dem Umschalten zwischen den beiden zuvor erwähnten, einseitigen Vorgehensweisen ermöglicht ein schnelleres Erreichen einer gewählten Raumtemperatur.

Aus diesen Regeln ergibt sich ein bevorzugtes Temperierverfahren für eine Anzahl von Temperieranordnungen 5,5', bei dem n definiert ist als (n > 2). Zur Durchführung dieses Temperierverfahrens ist die Steuerung 9 so programmiert, dass sie bei einem durch eine Temperaturänderung bedingten Eintritt der vom Raumtemperaturfühler 12 gemeldeten IST-Temperatur 13 in das erste Temperaturfenster 15:
a) dem Stellglied 11 einer einzelnen Temperieranordnung 5, deren Rücklauftemperatur den Rücklauftemperaturen aller anderen (n-1) Temperieranordnungen 5' in der Richtung der aktuellen Temperaturänderung vorangeht, den Befehl zum Schliessen des Ventils 10 für die erste Schliesszeit (t₁) erteilt und allen anderen (n-1) Temperieranordnungen 5' den Befehl erteilt während der ersten Schliesszeit (t₁) die Ventile 10' offen zu halten;
oder:
b) den Stellgliedern 11 der (n-1) Temperieranordnungen 5, deren Rücklauftemperaturen der Rücklauftemperatur einer einzelnen Temperieranordnung 5' in der Richtung der aktuellen Temperaturänderung vorangehen, den Befehl zum Schliessen der (n-1) Ventile 10 für die erste Schliesszeit (t₁) erteilt und der einzelnen Temperieranordnung 5' den Befehl erteilt während der ersten Schliesszeit (t₁) das Ventil 10' offen zu halten;
oder:
c) bis zum Erreichen einer Abweichung der IST-Temperatur 13 von 0.3 °C von der Soll-Temperatur 14 gemäss dem Verfahren a) vorzugehen und ab dem Erreichen einer Abweichung der IST-Temperatur 13 von 0.2 °C von der Soll-Temperatur 14 gemäss dem Verfahren b) vorzugehen.

Eine besonders bevorzugte Variante des erfindungsgemässen Verfahrens ermöglicht es allen Temperieranordnungen des Systems, das Temperierfluid 2 in den Temperieranordnungen 5,5' vor dem erneuten Erfassen und Beurteilen der Rücklauftemperaturen RL₁,RL₂ auszutauschen. Damit wird sichergestellt, dass die wirkliche (dynamische) Rücklauftemperatur des Temperierfluids und nicht etwa eine passive Veränderung der (statischen) Rücklauftemperatur des Temperierfluids durch den Einfluss des Bauteils oder seiner Umgebung erfasst wird.

Somit wird bevorzugt das Verfahren durchgeführt, dessen Resultate in der Figur 2 dargestellt sind. Dieses Verfahren ist dadurch gekennzeichnet, dass die Steuerung 9 nach Ablauf der ersten Schliesszeit (t₁) den Stellgliedern 11,11' aller Temperaturanordnungen 5,5' den Befehl erteilt die Ventile 10,10' für eine erste Offenzeit (t₄) zu öffnen.

Falls die Temperiervorrichtung 3 zum Heizen des Temperierfluids 2 ausgebildet ist wird des weiteren bevorzugt, dass die Steuerung 9, falls die vom Raumtemperaturfühler 12 gemeldete IST-Temperatur noch innerhalb der ersten negativen Temperaturdifferenz (ΔT₂) liegt, nach Ablauf der ersten Offenzeit (t₄) dem Stellglied 11,11' derjenigen Temperieranordnung 5,5', deren Rücklauftemperatur am höchsten ist, den Befehl zum Schliessen des Ventils 10,10' für eine zweite Schliesszeit (t₂) erteilt, wobei die die Steuerung 9 den Stellgliedern 11',11 der anderen Temperieranordnungen 5',5 den Befehl erteilt während der zweiten Schliesszeit (t₂) die Ventile 10',10 offen zu halten, und wobei die Steuerung 9 nach Ablauf der zweiten Schliesszeit (t₂) den Stellgliedern 11,11' aller Temperaturanordnungen 5,5'den Befehl erteilt die Ventile 10,10' für eine zweite Offenzeit (t₅) zu öffnen. Bevorzugt wird anschliessend, dass die Steuerung 9 nach Ablauf der zweiten Offenzeit (t₅) dem Stellglied 11,11' derjenigen Temperieranordnung 5,5', deren Rücklauftemperatur am höchsten ist, den Befehl zum Schliessen des Ventils 10,10' für eine dritte bis n-te Schliesszeit (t₃,...,tₙ) erteilt, wobei die Steuerung 9 den Stellgliedern 11',11 der anderen Temperieranordnungen 5',5 den Befehl erteilt während der dritten bis n-ten Schliesszeit (t₃,...,tₙ) die Ventile 10',10 offen zu halten, und wobei die Steuerung 9 nach Ablauf der dritten bis n-ten Schliesszeit (t₃,...,tₙ) den Stellgliedern 11,11' aller Temperaturanordnungen 5,5' den Befehl erteilt die Ventile 10,10' für eine dritte bis n-te Offenzeitzeit (t₆,...,tₘ) zu öffnen. (vgl. Fig. 2: Situation **C**).

Besonders bevorzugt wird, dass die Steuerung 9, falls die vom Raumtemperaturfühler 12 gemeldete IST-Temperatur 13 nach Ablauf der ersten, zweiten oder dritten Offenzeit (t₄,t₅,t₆) höher ist als die erste negative Temperaturdifferenz (ΔT₂), den Stellgliedern 11,11' aller Temperaturanordnungen 5,5' den Befehl erteilt die Ventile 10,10' zu schliessen (vgl. Fig. 2: Wechsel der Situation **C**/**D**).

Des Weiteren wird bevorzugt, dass die Steuerung 9, falls die vom Raumtemperaturfühler 12 gemeldete IST-Temperatur nach Ablauf der ersten, zweiten oder dritten Offenzeit (t₄,t₅,t₆) tiefer ist als die erste negative Temperaturdifferenz (ΔT₂), den Stellgliedern 11,11' aller Temperaturanordnungen 5,5' den Befehl erteilt die Ventile 10,10' zu öffnen (vgl. Fig. 2: Wechsel der Situation **D**/**E**). Anschliessend wird wie bereits beschrieben immer dasjenige Ventil 10,10' für eine bestimmte Zeit (t₁,t₂,t₃,...,tₙ) geschlossen (vgl. Fig. 2: Situation **E**).

Es wird bei beiden Ausführungsformen bzw. Varianten des erfindungsgemässen Temperierverfahrens bevorzugt, dass die Verfahrenschritte so lange wiederholt werden, bis die Temperiervorrichtung 3 ausgeschaltet oder eine neue SOLL-Temperatur 14 für die unmittelbare Umgebung des Bauteils 4 vorbestimmt und in der Steuerung 9 implementiert wird.

Für Kühlsysteme gilt sinngemäss, dass die Steuerung 9 nach Ablauf der ersten Offenzeit (t₄), falls die vom Raumtemperaturfühler 12 gemeldete IST-Temperatur 13 noch innerhalb der ersten positiven Temperaturdifferenz (ΔT₁) liegt, dem Stellglied 11,11' derjenigen Temperieranordnung 5,5', deren Rücklauftemperatur am tiefsten ist, den Befehl zum Schliessen des Ventils 10,10' für eine zweite Schliesszeit (t₂) erteilt, wobei die die Steuerung 9 den Stellgliedern 11',11 der anderen Temperieranordnungen 5',5 den Befehl erteilt während der zweiten Schliesszeit (t₂) die Ventile 10',10 offen zu halten, und wobei die Steuerung 9 nach Ablauf der zweiten Schliesszeit (t₂) den Stellgliedern 11,11' aller Temperaturanordnungen 5,5'den Befehl erteilt die Ventile 10,10' für eine zweite Offenzeit (t₅) zu öffnen. Bevorzugt wird anschliessend, dass die Steuerung 9 nach Ablauf der zweiten Offenzeit (t₅) dem Stellglied 11,11' derjenigen Temperieranordnung 5,5', deren Rücklauftemperatur am tiefsten ist, den Befehl zum Schliessen des Ventils 10,10' für eine dritte Schliesszeit (t₃) erteilt, wobei die Steuerung 9 den Stellgliedern 11',11 der anderen Temperieranordnungen 5',5 den Befehl erteilt während der dritten Schliesszeit (t₃) die Ventile 10',10 offen zu halten, und wobei die Steuerung 9 nach Ablauf der dritten Schliesszeit (t₃) den Stellgliedern 11,11' aller Temperaturanordnungen 5,5'den Befehl erteilt die Ventile 10,10' für eine dritte Offenzeit (t₆) zu öffnen.

Des Weiteren wird im Falle von Kühlsystemen bevorzugt, dass die Steuerung 9, falls die vom Raumtemperaturfühler 12 gemeldete IST-Temperatur 13 nach Ablauf der ersten, zweiten oder dritten Offenzeit (t₄,t₅,t₆) tiefer ist als die erste positive Temperaturdifferenz (ΔT₁), den Stellgliedern 11,11' aller Temperaturanordnungen 5,5'den Befehl erteilt die Ventile 10,10' zu schliessen. Zudem wird bevorzugt, dass die Steuerung 9, falls die vom Raumtemperaturfühler 12 gemeldete IST-Temperatur nach Ablauf der ersten, zweiten oder dritten Offenzeit (t₄,t₅,t₆) höher ist als die erste positive Temperaturdifferenz (ΔT₁), den Stellgliedern 11,11' aller Temperaturanordnungen 5,5' den Befehl erteilt die Ventile 10,10' zu öffnen.

Die vom Raumtemperaturfühler 12 gemeldete IST-Temperatur 13 könnte die vorbestimmte SOLL-Temperatur 14 überschwingen, d.h. im Falle von Heizsystemen überschreiten oder im Falle von Kühlsystemen unterschreiten.

Als erste Massnahme für solche Fälle wird bevorzugt, dass die Steuerung 9, falls die Temperiervorrichtung 3 zum Heizen des Temperierfluids 2 ausgebildet ist, und falls die vom Raumtemperaturfühler 12 gemeldete IST-Temperatur 13 nach Ablauf der ersten, zweiten oder dritten Schliesszeit (t₁,t₂,t₃) höher ist als die erste negative Temperaturdifferenz (ΔT₂), den Stellgliedern 11,11' aller Temperaturanordnungen 5,5' den Befehl erteilt die Ventile 10,10' zu schliessen. Für Kühlsysteme gilt sinngemäss, dass falls die vom Raumtemperaturfühler 12 gemeldete IST-Temperatur 13 nach Ablauf der ersten, zweiten oder dritten Schliesszeit (t₁,t₂,t₃) tiefer ist als die erste positive Temperaturdifferenz (ΔT₁), den Stellgliedern 11,11' aller Temperaturanordnungen 5,5' den Befehl erteilt die Ventile 10,10' zu schliessen.

Als zweite Massnahme und um zu verhindern, dass die IST-Temperatur 13 die vorbestimmte SOLL-Temperatur 14 deutlich überschwingt wird bevorzugt, dass die Steuerung 9 einem Stellglied 22 den Befehl erteilt ein zugeordnetes, in einer gemeinsamen Vorlaufleitung bzw. Vorlaufteilleitung 6 eingebautes Schliessventil 21 zu schliessen und damit den Vorlauf, an dem üblicherweise auch eine Umwälzpumpe 20 angeschlossen ist, zu blockieren. Zudem wird vorzugsweise auch die Umwälzpumpe 20 ausgeschaltet. Sollte die Umwälzung des Temperierfluids 2 von, zu und in den Temperaturanordnungen 5,5' durch Konvektion erfolgen, genügt ein Schliessen des Schliessventils 21 zum Blockieren der gemeinsamen Vorlaufleitung bzw. Vorlaufteilleitung 6. Bei Kühlsystemen wird sinngemäss ebenfalls ein zentrales Schliessventil 21 geschlossen.

Sinngemäss werden entsprechend dem eben vorgestellten Algorithmus bei **n** Heiz- oder Kühlsträngen 5 maximal **n-1** Ventile 10 während den Schliesszeiten (t₁,t₂,t₃,...,tₙ) geschlossen. Also werden beispielsweise bei 3 Temperaturanordnungen 5,5' ein oder zwei Ventile 10,10' und bei 4 Temperaturanordnungen 5,5' ein, zwei oder drei Ventile 10,10' während den Schliesszeiten (t₁,t₂,t₃,...,tₙ) geschlossen.

Um eine noch feinere, automatische Abstimmung des Temperiersystems 1 (also eines Heiz- oder Kühlsystems) zu erreichen wird vorgeschlagen, dass ein die vorbestimmte SOLL-Temperatur 14 nicht umfassendes und nur Teilbereiche des ersten Temperaturfensters 15 umfassendes, zweites Temperaturfenster 23 definiert und in der Steuerung 9 implementiert wird. Dabei wird das zweite Temperaturfenster 23 als eine zweite positive Temperaturdifferenz (ΔT₃) oder als eine zweite negative Temperaturdifferenz (ΔT₄) zu der vorbestimmten SOLL-Temperatur 14 definiert.

Folglich wird bevorzugt, dass die Steuerung 9, falls die Temperiervorrichtung 3 zum Heizen des Temperierfluids 2 ausgebildet ist, und falls die vom Raumtemperaturfühler 12 gemeldete IST-Temperatur 13 nach Ablauf der ersten, zweiten oder dritten Schliesszeit (t₁,t₂,t₃) tiefer ist als die zweite negative Temperaturdifferenz (ΔT₄), den Stellgliedern 11,11' aller Temperaturanordnungen 5,5' den Befehl erteilt die Ventile 10,10' zu öffnen (vgl. E). Des Weiteren wird bevorzugt, dass die Steuerung 9, falls die vom Raumtemperaturfühler 12 gemeldete IST-Temperatur 13 nach Ablauf der ersten, zweiten oder dritten Schliesszeit (t₁,t₂,t₃) innerhalb der zweiten negativen Temperaturdifferenz (ΔT₄) liegt, dem Stellglied 11,11' derjenigen Temperieranordnung 5,5', deren Rücklauftemperatur am höchsten ist, den Befehl zum Schliessen des Ventils 10,10' für eine n-te Schliesszeit (tₙ) erteilt, wobei die Steuerung 9 den Stellgliedern 11',11 der anderen Temperieranordnungen 5',5 den Befehl erteilt während der n-ten Schliesszeit (tₙ) die Ventile 10',10 offen zu halten.

Ausserdem wird bevorzugt, dass die Steuerung 9, falls die vom Raumtemperaturfühler 12 gemeldete IST-Temperatur 13 nach Ablauf der ersten, zweiten, dritten oder n-ten Schliesszeit (t₁,t₂,t₃,...,tₙ) höher ist als die zweite negative Temperaturdifferenz (ΔT₄), den Stellgliedern 11,11' aller Temperaturanordnungen 5,5'den Befehl erteilt die Ventile 10,10' zu schliessen.

Für Kühlsystem gilt sinngemäss, dass die Steuerung 9, falls die vom Raumtemperaturfühler 12 gemeldete IST-Temperatur 13 nach Ablauf der ersten, zweiten oder dritten Schliesszeit (t₁,t₂,t₃) höher ist als die zweite positive Temperaturdifferenz (ΔT₃), den Stellgliedern 11,11' aller Temperaturanordnungen 5,5'den Befehl erteilt die Ventile 10,10' zu öffnen. Des Weiteren wird bevorzugt, dass die Steuerung 9, falls die vom Raumtemperaturfühler 12 gemeldete IST-Temperatur 13 nach Ablauf der ersten, zweiten oder dritten Schliesszeit (t₁,t₂,t₃) innerhalb der zweiten positiven Temperaturdifferenz (ΔT₃) liegt, dem Stellglied 11,11' derjenigen Temperieranordnung 5,5', deren Rücklauftemperatur am tiefsten ist, den Befehl zum Schliessen des Ventils 10,10' für eine n-te Schliesszeit (tₙ) erteilt, wobei die Steuerung 9 den Stellgliedern 11',11 der anderen Temperieranordnungen 5',5 den Befehl erteilt während der n-ten Schliesszeit (tₙ) die Ventile 10',10 offen zu halten. Ausserdem wird bevorzugt, dass die Steuerung 9, falls die vom Raumtemperaturfühler 12 gemeldete IST-Temperatur 13 nach Ablauf der ersten, zweiten oder dritten Schliesszeit (t₁,t₂,t₃) tiefer ist als die zweite positive Temperaturdifferenz (ΔT₃), den Stellgliedern 11,11' aller Temperaturanordnungen 5,5' den Befehl erteilt die Ventile 10,10' zu schliessen.

Sinngemäss werden entsprechend dem eben vorgestellten, verbesserten Algorithmus bei **o** Heiz- oder Kühlsträngen 5 maximal **o-1** Ventile 10 während den Schliesszeiten (t₁,t₂,t₃,...,tₙ) geschlossen bzw. **o** Ventile während den Offenzeiten (t₄,t₅,t₆,...,tₘ) offen gehalten.

Bevorzugte Schliesszeiten (t₁,t₂,t₃,...,tₙ) betragen 2 bis 30 Minuten und bevorzugte Offenzeiten (t₄,t₅,t₆,...,tₘ) betragen 1 bis 20 Minuten, wobei Schliesszeiten von 5 bis 20 Minuten und Offenzeiten von 2 bis 15 Minuten besonders bevorzugt und Schliesszeiten von 10 bis 15 Minuten und Offenzeiten von 5 bis 10 Minuten besonders bevorzugt sind.

Eine bevorzugte erste positive Temperaturdifferenz (ΔT₁) beträgt 0.1 bis 2 °C, besonders bevorzugt 0.1 bis 1 °C und speziell bevorzugt 0.1 bis 0.3 °C. Eine bevorzugte erste negative Temperaturdifferenz (ΔT₂) beträgt 0.1 bis 4 °C, besonders bevorzugt 0.1 bis 2 °C und speziell bevorzugt 0.1 bis 0.5 °C. Eine bevorzugte zweite positive Temperaturdifferenz (ΔT₃) beträgt 0.1 bis 1 °C, besonders bevorzugt 0.1 bis 0.5 °C und speziell bevorzugt 0.1 bis 0.2 °C. Eine bevorzugte zweite negative Temperaturdifferenz (ΔT₄) beträgt 0.1 bis 2 °C, besonders bevorzugt 0.1 bis 1 °C und speziell bevorzugt 0.1 bis 0.2 °C.

Gleiche Bezugszeichen beziehen sich auf entsprechende Vorrichtungsmerkmale.

**Bezugszeichenliste**

| | | | |
|---|---|---|---|
| 1 | Temperiersystem | | |
| 2 | Temperierfluid | | |
| 3 | Temperiervorrichtung | | |
| 4 | Bauteil | t₁ | erste Schliesszeit |
| 5,5' | Temperieranordnung | t₂ | zweite Schliesszeit |
| 6 | gemeinsame Vorlaufleitung gemeinsame Vorlaufteilleitung | t₃ tₙ | dritte Schliesszeit n-te Schliesszeit |
| 6',6" | individuelle Vorlaufleitungsteile | t₄ | erste Offenzeit |
| 7 | gemeinsame Rücklaufleitung gemeinsame Rücklaufteilleitung | t₅ t₆ | zweite Offenzeit dritte Offenzeit |
| 7',7" | individuelle Rücklaufleitungsteile | tₘ | m-te Offenzeit |
| 8,8' | Rücklauftemperaturfühler | | |
| 9 | Steuerung | ΔT₁ | 1. positive Temperaturdifferenz |
| 10,10' | Ventil | ΔT₂ | 1. negative Temperaturdifferenz |
| 11,11' | Stellglied | ΔT₃ | 2. positive Temperaturdifferenz |
| 12 | Raumtemperaturfühler | ΔT₄ | 2. negative Temperaturdifferenz |
| 13 | IST-Temperatur | | |
| 14 | SOLL-Temperatur | RL₁ | Rücklauftemperatur von 5,8 |
| 15 | erstes Temperaturfenster | RL₂ | Rücklauftemperatur von 5',8' |
| 16 | Datenspeicher | | |
| 17 | Rechner | SG₁ | Schaltsignal für 11 |
| 18 | Vorlaufverteilerbalken | SG₂ | Schaltsignal für 11' |
| 19 | Rücklaufverteilerbalken | | |
| 20 | Umwälzpumpe | | |
| 21 | Schliessventil | | |
| 22 | Stellglied zu 21 | | |
| 23 | zweites Temperaturfenster | | |

## Patentansprüche

1. Verfahren zum Temperieren eines Bauteils, bei welchem ein Temperiersystem (1) bereitgestellt wird, das umfasst:
a) eine zum Heizen oder Kühlen eines Temperierfluids (2) ausgebildete Temperiervorrichtung (3);
b) mindestens zwei, d.h. (n ≥ 2) Temperieranordnungen (5,5'), die zum Durchleiten des Temperierfluids (2) durch ein zu temperierendes Bauteil (4) ausgebildet sind und die über (n ≥ 2) individuelle Vorlaufleitungsteile (6',6") und über (n ≥ 2) individuelle Rücklaufleitungsteile (7',7") mit der Temperiervorrichtung (3) verbunden sind, wobei jeder der (n ≥ 2) individuellen Rücklaufleitungsteile (7',7") einen eigenen Rücklauftemperaturfühler (8,8') zum Messen der individuellen Rücklauftemperatur des Temperierfluids (2) aus der entsprechenden Temperieranordnung (5,5') umfasst; und
c) eine Steuerung (9), welche in den (n ≥ 2) individuellen Vorlaufleitungsteilen (6',6") oder (n ≥ 2) Rücklaufleitungsteilen (7',7") angeordnete Ventile (10,10') mit Stellgliedern (11,11') umfasst, die zum Einstellen eines Öffnungsgrades des jeweils zugeordneten Ventils (10,10') ausgebildet sind, wobei die Steuerung (9) zum Ansteuern der Stellglieder (11,11') und zum Ablesen der Rücklauftemperaturfühler (8,8') ausgebildet ist und einen Raumtemperaturfühler (12) zum Feststellen und Melden einer IST-Temperatur (13) in einer unmittelbaren Umgebung des Bauteils (4) umfasst;
**wobei das Temperierverfahren dadurch gekennzeichnet ist, dass:**
i) auf das Verwenden von Vorlauftemperaturfühlern verzichtet wird;
ii) eine SOLL-Temperatur (14) für die unmittelbare Umgebung des Bauteils (4) vorbestimmt wird;
iii) ein die vorbestimmte SOLL-Temperatur (14) nicht umfassendes erstes Temperaturfenster (15) als erste positive Temperaturdifferenz (ΔT₁) für ein Kühlen des Bauteils (4) oder als erste negative Temperaturdifferenz (ΔT₂) für ein Heizen des Bauteils (4) zu der vorbestimmten SOLL-Temperatur (14) definiert und in der Steuerung (9) implementiert wird; und
iv) die Steuerung (9), bei einem durch eine Temperaturänderung bedingten Eintritt der vom Raumtemperaturfühler (12) gemeldeten IST-Temperatur (13) in das erste Temperaturfenster (15), den Stellgliedern (11) von [1 bis (n-1)] Temperieranordnungen (5), deren Rücklauftemperatur den Rücklauftemperaturen der anderen [1 bis (n-1)] Temperieranordnungen (5') in der Richtung der aktuellen Temperaturänderung vorangeht, den Befehl zum Schliessen des Ventils (10) für eine erste Schliesszeit (t₁) erteilt, wobei die Steuerung (9) den Stellgliedern (11') der anderen [1 bis (n-1)] Temperieranordnungen (5') den Befehl erteilt während der ersten Schliesszeit (t₁) die Ventile (10') offen zu halten.

2. Temperierverfahren nach Anspruch 1, **dadurch gekennzeichnet, dass** eine Anzahl von (n) Temperieranordnungen (5,5') ausgewählt ist aus einer Gruppe die (n = 2), (n = 3), (n = 4), und (n = 5) Temperieranordnungen (5,5') umfasst.

3. Temperierverfahren nach Anspruch 2, **dadurch gekennzeichnet, dass** die Anzahl (n) der Temperieranordnungen (5,5') definiert ist als (n > 2), wobei die Steuerung (9) so programmiert ist, dass sie bei einem durch eine Temperaturänderung bedingten Eintritt der vom Raumtemperaturfühler (12) gemeldeten IST-Temperatur (13) in das erste Temperaturfenster (15):
a) dem Stellglied (11) einer einzelnen Temperieranordnung (5), deren Rücklauftemperatur den Rücklauftemperaturen aller anderen (n-1) Temperieranordnungen (5') in der Richtung der aktuellen Temperaturänderung vorangeht, den Befehl zum Schliessen des Ventils (10) für die erste Schliesszeit (t₁) erteilt und allen anderen (n-1) Temperieranordnungen (5') den Befehl erteilt während der ersten Schliesszeit (t₁) die Ventile (10') offen zu halten;
oder:
b) den Stellgliedern (11) der (n-1) Temperieranordnungen (5), deren Rücklauftemperaturen der Rücklauftemperatur einer einzelnen Temperieranordnung (5') in der Richtung der aktuellen Temperaturänderung vorangehen, den Befehl zum Schliessen der (n-1) Ventile (10) für die erste Schliesszeit (t₁) erteilt und der einzelnen Temperieranordnung (5') den Befehl erteilt während der ersten Schliesszeit (t₁) das Ventil (10') offen zu halten;
oder:
c) bis zum Erreichen einer Abweichung der IST-Temperatur (13) von 0.3 °C von der Soll-Temperatur (14) gemäss dem Verfahren a) vorzugehen und ab dem Erreichen einer Abweichung der IST-Temperatur (13) von 0.2 °C von der Soll-Temperatur (14) gemäss dem Verfahren b) vorzugehen.

4. Temperierverfahren nach Anspruch 1, 2 oder 3, **dadurch gekennzeichnet, dass** die Steuerung (9) nach Ablauf der ersten Schliesszeit (t₁), falls die Temperiervorrichtung (3) zum Heizen des Temperierfluids (2) ausgebildet ist, und falls die vom Raumtemperaturfühler (12) gemeldete IST-Temperatur (13) noch innerhalb der ersten negativen Temperaturdifferenz (ΔT₂) liegt, den Stellgliedern (11) von [1 bis (n-1)] Temperieranordnungen (5), deren Rücklauftemperaturen am höchsten sind, den Befehl zum Schliessen der Ventile (10) für eine zweite Schliesszeit (t₂) erteilt, wobei die Steuerung (9) den Stellgliedern (11') der anderen [1 bis (n-1)] Temperieranordnungen (5') den Befehl erteilt während der zweiten Schliesszeit (t₂) die Ventile (10') offen zu halten.

5. Temperierverfahren nach Anspruch 4, **dadurch gekennzeichnet, dass** die Steuerung (9) nach Ablauf der zweiten Schliesszeit (t₂) den Stellgliedern (11) von [1 bis (n-1)] Temperieranordnungen (5), deren Rücklauftemperaturen am höchsten sind, den Befehl zum Schliessen der Ventile (10) für eine dritte Schliesszeit (t₃) erteilt, wobei die Steuerung (9) den Stellgliedern (11') der anderen [1 bis (n-1)] Temperieranordnungen (5') den Befehl erteilt während der dritten Schliesszeit (t₃) die Ventile (10') offen zu halten.

6. Temperierverfahren nach Anspruch 5, **dadurch gekennzeichnet, dass** diese Verfahrenschritte so lange wiederholt werden, bis die Temperiervorrichtung (3) ausgeschaltet oder eine neue SOLL-Temperatur (14) für die unmittelbare Umgebung des Bauteils (4) vorbestimmt und in der Steuerung (9) implementiert wird.

7. Temperierverfahren nach Anspruch 1,2 oder 3, **dadurch gekennzeichnet, dass** die Steuerung (9) nach Ablauf der ersten Schliesszeit (t₁) den Stellgliedern (11,11') aller, d.h. von (n) Temperaturanordnungen (5,5') den Befehl erteilt die Ventile (10,10') für eine erste Offenzeit (t₄) zu öffnen.

8. Temperierverfahren nach Anspruch 7, **dadurch gekennzeichnet, dass** die Steuerung (9) nach Ablauf der ersten Offenzeit (t₄), falls die Temperiervorrichtung (3) zum Heizen des Temperierfluids (2) ausgebildet ist, und falls die vom Raumtemperaturfühler (12) gemeldete IST-Temperatur noch innerhalb der ersten negativen Temperaturdifferenz (ΔT₂) liegt, den Stellgliedern (11) von [1 bis (n-1)] Temperieranordnungen (5), deren Rücklauftemperaturen am höchsten sind, den Befehl zum Schliessen der Ventile (10) für eine zweite Schliesszeit (t₂) erteilt, wobei die die Steuerung (9) den Stellgliedern (11') der anderen [1 bis (n-1)] Temperieranordnungen (5') den Befehl erteilt während der zweiten Schliesszeit (t₂) die Ventile (10') offen zu halten, und wobei die Steuerung (9) nach Ablauf der zweiten Schliesszeit (t₂) den Stellgliedern (11,11') aller (n) Temperaturanordnungen (5,5') den Befehl erteilt die Ventile (10,10') für eine zweite Offenzeit (t₅) zu öffnen.

9. Temperierverfahren nach Anspruch 8, **dadurch gekennzeichnet, dass** die Steuerung (9) nach Ablauf der zweiten Offenzeit (t₅) den Stellgliedern (11) von [1 bis (n-1)] Temperieranordnungen (5), deren Rücklauftemperaturen am höchsten sind, den Befehl zum Schliessen der Ventile (10) für eine dritte Schliesszeit (t₃) erteilt, wobei die Steuerung (9) den Stellgliedern (11') der anderen [1 bis (n-1)] Temperieranordnungen (5') den Befehl erteilt während der dritten Schliesszeit (t₃) die Ventile (10') offen zu halten, und wobei die Steuerung (9) nach Ablauf der dritten Schliesszeit (t₂) den Stellgliedern (11,11') aller (n) Temperaturanordnungen (5,5') den Befehl erteilt die Ventile (10,10') für eine dritte Offenzeit (t₆) zu öffnen.

10. Temperierverfahren nach einem der Ansprüche 8 oder 9, **dadurch gekennzeichnet, dass** die Steuerung (9), falls die vom Raumtemperaturfühler (12) gemeldete IST-Temperatur (13) nach Ablauf der ersten, zweiten, dritten oder m-ten Offenzeit (t₄,t₅,t₆,...,tₘ) höher ist als die erste negative Temperaturdifferenz (ΔT₂), den Stellgliedern (11,11') aller (n) Temperaturanordnungen (5,5') den Befehl erteilt die Ventile (10,10') zu schliessen.

11. Temperierverfahren nach einem der Ansprüche 8 oder 9, **dadurch gekennzeichnet, dass** die Steuerung (9), falls die vom Raumtemperaturfühler (12) gemeldete IST-Temperatur nach Ablauf der ersten, zweiten , dritten oder m-ten Offenzeit (t₄,t₅,t₆,...,tₘ) tiefer ist als die erste negative Temperaturdifferenz (ΔT₂), den Stellgliedern (11,11') aller (n) Temperaturanordnungen (5,5') den Befehl erteilt die Ventile (10,10') zu öffnen.

12. Temperierverfahren nach Anspruch 9, **dadurch gekennzeichnet, dass** diese Verfahrenschritte so lange wiederholt werden, bis die Temperiervorrichtung (3) ausgeschaltet oder eine neue SOLL-Temperatur (14) für die unmittelbare Umgebung des Bauteils (4) vorbestimmt und in der Steuerung (9) implementiert wird.

13. Temperierverfahren nach einem der Ansprüche 1 bis 5 oder 8 bis 12, **dadurch gekennzeichnet, dass** die Steuerung (9), falls die Temperiervorrichtung (3) zum Heizen des Temperierfluids (2) ausgebildet ist, und falls die vom Raumtemperaturfühler (12) gemeldete IST-Temperatur (13) nach Ablauf der ersten, zweiten, dritten oder n-ten Schliesszeit (t₁,t₂,t₃,...,tₙ) höher ist als die erste negative Temperaturdifferenz (ΔT₂), den Stellgliedern (11,11') aller (n) Temperaturanordnungen (5,5') den Befehl erteilt die Ventile (10,10') zu schliessen.

14. Temperierverfahren nach einem der vorhergehenden Ansprüche, **dadurch gekennzeichnet, dass** ein die vorbestimmte SOLL-Temperatur (14) nicht umfassendes und nur Teilbereiche des ersten Temperaturfensters (15) umfassendes, zweites Temperaturfenster (23) definiert und in der Steuerung (9) implementiert wird, wobei das zweite Temperaturfenster (23) als eine zweite positive Temperaturdifferenz (ΔT₃) oder als eine zweite negative Temperaturdifferenz (ΔT₄) zu der vorbestimmten SOLL-Temperatur (14) definiert wird.

15. Temperierverfahren nach Anspruch 14, **dadurch gekennzeichnet, dass** die Steuerung (9), falls die Temperiervorrichtung (3) zum Heizen des Temperierfluids (2) ausgebildet ist, und falls die vom Raumtemperaturfühler (12) gemeldete IST-Temperatur (13) nach Ablauf der ersten, zweiten, dritten oder n-ten Schliesszeit (t₁,t₂,t₃,...,tₙ) tiefer ist als die zweite negative Temperaturdifferenz (ΔT₄), den Stellgliedern (11,11') aller (n) Temperaturanordnungen (5,5') den Befehl erteilt die Ventile (10,10') zu öffnen.

16. Temperierverfahren nach Anspruch 14, **dadurch gekennzeichnet, dass** die Steuerung (9), falls die Temperiervorrichtung (3) zum Heizen des Temperierfluids (2) ausgebildet ist, und falls die vom Raumtemperaturfühler (12) gemeldete IST-Temperatur (13) nach Ablauf der ersten, zweiten oder dritten Schliesszeit (t₁,t₂,t₃) innerhalb der zweiten negativen Temperaturdifferenz (ΔT₄) liegt, den Stellglieder (11) von [1 bis (n-1)] Temperieranordnungen (5,5'), deren Rücklauftemperaturen am höchsten sind, den Befehl zum Schliessen der Ventile (10) für eine n-te Schliesszeit (tₙ) erteilt, wobei die Steuerung (9) den Stellgliedern (11') der anderen [1 bis (n-1)] Temperieranordnungen (5') den Befehl erteilt während der n-ten Schliesszeit (tₙ) die Ventile (10') offen zu halten.

17. Temperierverfahren nach Anspruch 14, **dadurch gekennzeichnet, dass** die Steuerung (9), falls die Temperiervorrichtung (3) zum Heizen des Temperierfluids (2) ausgebildet ist, und falls die vom Raumtemperaturfühler (12) gemeldete IST-Temperatur (13) nach Ablauf der ersten, zweiten oder dritten Schliesszeit (t₁,t₂,t₃) höher ist als die zweite negative Temperaturdifferenz (ΔT₄), den Stellgliedern (11,11') aller (n) Temperaturanordnungen (5,5') den Befehl erteilt die Ventile (10,10') zu schliessen.

18. Temperiersystem (1) zum Durchführen der Temperierverfahren gemäss einem der Ansprüche 1 bis 17, **dadurch gekennzeichnet, dass** das Temperiersystem (1) umfasst:
a) eine zum Heizen oder Kühlen eines Temperierfluids (2) ausgebildete Temperiervorrichtung (3);
b) mindestens zwei, d.h. (n ≥ 2) Temperieranordnungen (5,5'), die zum Durchleiten des Temperierfluids (2) durch ein zu temperierendes Bauteil (4) ausgebildet sind und die über (n ≥ 2) individuelle Vorlaufleitungsteile (6',6") und über (n ≥ 2) individuelle Rücklaufleitungsteile (7',7") mit der Temperiervorrichtung (3) verbunden sind, wobei jeder der (n ≥ 2) individuellen Rücklaufleitungsteile (7',7") einen eigenen Rücklauftemperaturfühler (8,8') zum Messen der individuellen Rücklauftemperatur des Temperierfluids (2) aus der entsprechenden Temperieranordnung (5,5') umfasst;
c) keinen Vorlauftemperaturfühler; und
d) eine Steuerung (9), welche in den (n ≥ 2) individuellen Vorlaufleitungsteilen (6',6") oder (n ≥ 2) Rücklaufleitungsteilen (7',7") angeordnete Ventile (10,10') mit Stellgliedern (11,11') umfasst, die zum Einstellen eines Öffnungsgrades des jeweils zugeordneten Ventils (10,10') ausgebildet sind, wobei die Steuerung (9) zum Ansteuern der Stellglieder (11,11') und zum Ablesen der Rücklauftemperaturfühler (8,8') ausgebildet ist und einen Raumtemperaturfühler (12) zum Feststellen und Melden einer IST-Temperatur (13) in einer unmittelbaren Umgebung des Bauteils (4) umfasst.

19. Temperiersystem (1) nach Anspruch 18, **dadurch gekennzeichnet, dass** die Steuerung (9) einen Datenspeicher (16) für das Abspeichern von Parametern umfasst, wobei die Parameter ausgewählt sind aus einer Gruppe, die zumindest eine SOLL-Temperatur (14), ein erstes Temperaturfenster (15), ein zweites Temperaturfenster (23), eine erste, zweite, dritte bis n-te Schliesszeit (t₁,t₂,t₃,...,tₙ) und eine erste, zweite, dritte bis m-te Offenzeit (t₄,t₅,t₆,...,tₘ) umfasst, **und dass** die Steuerung (9) einen Rechner (17) zum Abrufen und Verarbeiten der Parameter aus dem Datenspeicher (16) und zum Kontrollieren des Temperiersystems (1) umfasst.

20. Temperiersystem (1) nach Anspruch 18 oder 19, **dadurch gekennzeichnet, dass** die individuellen Vorlaufleitungsteile (6',6") in einen Vorlaufverteilerbalken (18) münden, wobei der Vorlaufverteilerbalken (18) über eine gemeinsame Vorlaufteilleitung (6) mit der Temperiervorrichtung (3) verbunden ist.

21. Temperiersystem (1) nach Anspruch 18 oder 19, **dadurch gekennzeichnet, dass** die individuellen Rücklaufleitungsteile (7',7") in einen Rücklaufverteilerbalken (19) münden, wobei der Rücklaufverteilerbalken (19) über eine gemeinsame Rücklaufteilleitung (7) mit der Temperiervorrichtung (3) verbunden ist.

22. Temperiersystem (1) nach einem der Ansprüche 20 oder 21, **dadurch gekennzeichnet, dass** es eine Umwälzpumpe (20) umfasst, die in die gemeinsame Vorlaufteilleitung (6) oder in die gemeinsame Rücklaufteilleitung (7) eingebaut ist.

## Claims

1. Method for the temperature control of a component in which a temperature-control system (1) is provided, comprising:
a) a temperature-control device (3) designed for heating or cooling a temperature-control fluid (2);
b) at least two, i.e. (n≥2) temperature-control assemblies (5, 5') which are designed for passing the temperature-control fluid (2) through a component (4) to be temperature-controlled and which are connected to the temperature-control device (3) via (n≥2) individual feed line parts (6', 6") and via (n≥2) individual return line parts (7', 7"), wherein each of the (n≥2) individual return line parts (7', 7") comprises its own return flow temperature sensor (8, 8') for measuring the individual return flow temperature of the temperature-control fluid (2) from the corresponding temperature-control assembly (5, 5'); and
c) a controller (9), which comprises valves (10, 10') having actuators (11, 11') which are arranged in the (n≥2) individual feed line parts (6', 6") or (n≥2) return line parts (7', 7") and which are designed for setting an opening degree of the respectively associated valve (10, 10'), wherein the controller (9) is designed for actuating the actuators (11, 11') and for reading the return flow temperature sensors (8, 8') and comprises a room temperature sensor (12) for detecting and reporting an ACTUAL temperature (13) in an immediate vicinity of the component (4);
**wherein the temperature-control method is characterized in that:**
i) the use of feed flow temperature sensors is omitted;
ii) a TARGET temperature (14) is predetermined for the immediate vicinity of the component (4);
iii) a first temperature window (15) not including the predetermined TARGET temperature (14) is defined as a first positive temperature difference (ΔT₁) for cooling the component (4) or as a first negative temperature difference (ΔT₂) for heating the component (4) to the predetermined TARGET temperature (14) and is implemented in the controller (9); and
iv) the controller (9), when the ACTUAL temperature (13) reported by the room temperature sensor (12) enters the first temperature window (15) as a result of a change in temperature, issues to the actuators (11) of [1 to (n-1)] temperature-control assemblies (5), whose return flow temperature precedes the return flow temperatures of the other [1 to (n-1)] temperature-control assemblies (5') in the direction of the current change in temperature, the command to close the valve (10) for a first closing time (t₁), wherein the controller (9) issues the command to the actuators (11') of the other [1 to (n-1)] temperature-control assemblies (5') to keep the valves (10') open during the first closing time (t₁).

2. Temperature-control method according to claim 1, **characterized in that** a number of (n) temperature-control assemblies (5, 5') is selected from a group comprising (n=2), (n=3), (n=4), and (n=5) temperature-control assemblies (5, 5').

3. Temperature-control method according to claim 2, **characterized in that** the number (n) of the temperature-control assemblies (5, 5') is defined as (n>2), wherein the controller (9) is programmed in such a way that said controller, during an entry of the ACTUAL temperature (13) reported by the room temperature sensor (12) into the first temperature window (15) due to a temperature change:
a) issues the command to close the valve (10) for the first closing time (t₁) to the actuator (11) of an individual temperature-control assembly (5), the return flow temperature of which precedes the return flow temperatures of all other (n-1) temperature-control assemblies (5') in the direction of the current temperature change, and issues the command to all other (n-1) temperature-control assemblies (5') to keep the valves (10') open during the first closing time (ti);
or:
b) issues the command to close the (n-1) valves (10) for the first closing time (t₁) to the actuators (11) of the (n-1) temperature-control assemblies (5), the return flow temperatures of which precede the return flow temperature of an individual temperature-control assembly (5') in the direction of the current temperature change, and issues the command to the individual temperature-control assembly (5') to keep the valve (10') open during the first closing time (t₁); or:
c) is to proceed in accordance with procedure a) until reaching a deviation of the ACTUAL temperature (13) of 0.3 °C from the target temperature (14), and is to proceed in accordance with procedure b) from reaching a deviation of the ACTUAL temperature (13) of 0.2 °C from the target temperature (14).

4. Temperature-control method according to claim 1, 2 or 3, **characterized in that** after the first closing time (t₁) has elapsed, if the temperature-control device (3) is designed to heat the temperature-control fluid (2) and if the ACTUAL temperature (13) reported by the room temperature sensor (12) is still within the first negative temperature difference (ΔT₂), the controller (9) issues to the actuators (11) of [1 to (n-1)] temperature-control assemblies (5), the return flow temperatures of which are highest, the command for closing the valves (10) for a second closing time (t₂), wherein the controller (9) issues to the actuators (11') of the other [1 to (n-1)] temperature-control assemblies (5') the command for keeping the valves (10') open during the second closing time (t₂).

5. Temperature-control method according to claim 4, **characterized in that** the controller (9), after the second closing time (t₂) has elapsed, issues the command to the actuators (11) of [1 to (n-1)] temperature-control assemblies (5), the return flow temperatures of which are highest, to close the valves (10) for a third closing time (t₃), wherein the controller (9) issues the command to the actuators (11') of the other [1 to (n-1)] temperature-control assemblies (5') to keep the valves (10') open during the third closing time (t₃).

6. Temperature-control method according to claim 5, **characterized in that** these method steps are repeated until the temperature-control device (3) is switched off or a new TARGET temperature (14) for the immediate vicinity of the component (4) is predetermined and implemented in the controller (9).

7. Temperature-control method according to claim 1, 2 or 3, **characterized in that** the controller (9), after the first closing time (t₁) has elapsed, issues the command to the actuators (11, 11') of all, i.e. of (n), temperature-control assemblies (5, 5') to open the valves (10, 10') for a first open time (t₄).

8. Temperature-control method according to claim 7, **characterized in that** the controller (9), after the first open time (t₄) has elapsed, if the temperature-control device (3) is designed to heat the temperature-control fluid (2) and if the ACTUAL temperature reported by the room temperature sensor (12) is still within the first negative temperature difference (ΔT₂), issues the command for closing the valves (10) for a second closing time (t₂) to the actuators (11) of [1 to (n-1)] temperature-control assemblies (5) whose return flow temperatures are highest, wherein the controller (9) issues the command to the actuators (11') of the other [1 to (n-1)] temperature-control assemblies (5') to keep the valves (10') open during the second closing time (t₂), and wherein the controller (9) issues the command to the actuators (11, 11') of all (n) temperature-control assemblies (5, 5') to open the valves (10, 10') for a second open time (t₅) after the second closing time (t₂) has elapsed.

9. Temperature-control method according to claim 8, **characterized in that,** after the second open time (t₅) has elapsed, the controller (9) issues the command for closing the valves (10) for a third closing time (t₃) to the actuators (11) of [1 to (n-1)] temperature-control assemblies (5) whose return flow temperatures are highest, wherein the controller (9) issues the command to the actuators (11') of the other [1 to (n-1)] temperature-control assemblies (5') to keep the valves (10') open during the third closing time (t₃), and wherein the controller (9) issues the command to the actuators (11, 11') of all (n) temperature-control assemblies (5, 5') to open the valves (10, 10') for a third open time (t₆) after the third closing time (t₃) has elapsed.

10. Temperature-control method according to one of claims 8 or 9, **characterized in that,** if the ACTUAL temperature (13) reported by the room temperature sensor (12) is higher than the first negative temperature difference (ΔT₂) after the first, second, third or m^{th} open time (t₄, t₅, t₆, ..., tₘ) has elapsed, the controller (9) issues the command to the actuators (11, 11') of all (n) temperature-control assemblies (5, 5') to close the valves (10, 10').

11. Temperature-control method according to one of claims 8 or 9, **characterized in that,** if the ACTUAL temperature reported by the room temperature sensor (12) is lower than the first negative temperature difference (ΔT₂) after the first, second, third or m^{th} open time (t₄, t₅, t₆, ..., tₘ) has elapsed, the controller (9) issues the command to the actuators (11, 11') of all (n) temperature-control assemblies (5, 5') to open the valves (10, 10').

12. Temperature-control method according to claim 9, **characterized in that** these method steps are repeated until the temperature-control device (3) is switched off or a new TARGET temperature (14) for the immediate vicinity of the component (4) is predetermined and implemented in the controller (9).

13. Temperature-control method according to one of claims 1 to 5 or 8 to 12, **characterized in that,** if the temperature-control device (3) is designed to heat the temperature-control fluid (2) and if the ACTUAL temperature (13) reported by the room temperature sensor (12) is higher than the first negative temperature difference (ΔT₂) after the first, second, third or n^{th} closing time (t₁, t₂, t₃, ..., tₙ) has elapsed, the controller (9) issues the command to the actuators (11, 11') of all (n) temperature-control assemblies (5, 5') to close the valves (10, 10').

14. Temperature-control method according to one of the preceding claims, **characterized in that** a second temperature window (23), which does not comprise the predetermined TARGET temperature (14) and only comprises partial regions of the first temperature window (15), is defined and implemented in the controller (9), wherein the second temperature window (23) is defined as a second positive temperature difference (ΔT₃) or as a second negative temperature difference (ΔT₄) to the predetermined TARGET temperature (14).

15. Temperature-control method according to claim 14, **characterized in that,** if the temperature-control device (3) is designed for heating the temperature-control fluid (2) and if the ACTUAL temperature (13) reported by the room temperature sensor (12) is lower than the second negative temperature difference (ΔT₄) after the first, second, third or n^{th} closing time (t₁, t₂, t₃, ..., tₙ) has elapsed, the controller (9) issues the command to the actuators (11, 11') of all (n) temperature-control assemblies (5, 5') to open the valves (10, 10').

16. Temperature-control method according to claim 14, **characterized in that**, if the temperature-control device (3) is designed to heat the temperature-control fluid (2) and if the ACTUAL temperature (13) reported by the room temperature sensor (12) after the first, second or third closing time (t₁, t₂, t₃) has elapsed lies within the second negative temperature difference (ΔT₄), the controller (9) issues the command to the actuators (11) of [1 to (n-1)] temperature-control assemblies (5, 5'), the return flow temperatures of which are highest, to close the valves (10) for an n^{th} closing time (tₙ), wherein the controller (9) issues to the actuators (11') of the other [1 to (n-1)] temperature-control assemblies (5') the command to keep the valves (10') open during the n^{th} closing time (tₙ).

17. Temperature-control method according to claim 14, **characterized in that**, if the temperature-control device (3) is designed to heat the temperature-control fluid (2) and if the ACTUAL temperature (13) reported by the room temperature sensor (12) is higher than the second negative temperature difference (ΔT₄) after expiration of the first, second or third closing time (t₁, t₂, t₃), the controller (9) issues the command to the actuators (11, 11') of all (n) temperature-control assemblies (5, 5') to close the valves (10, 10').

18. Temperature-control system (1) for carrying out the temperature-control methods according to one of claims 1 to 17, **characterized in that** the temperature-control system (1) comprises:
a) a temperature-control device (3) designed for heating or cooling a temperature-control fluid (2);
b) at least two, i.e. (n≥2) temperature-control assemblies (5, 5') which are designed for passing the temperature-control fluid (2) through a component (4) to be temperature-controlled and which are connected to the temperature-control device (3) via (n≥2) individual feed line parts (6', 6") and via (n≥2) individual return line parts (7', 7"), wherein each of the (n≥2) individual return line parts (7', 7") comprises its own return flow temperature sensor (8, 8') for measuring the individual return flow temperature of the temperature-control fluid (2) from the corresponding temperature-control assembly (5, 5');
c) no feed flow temperature sensor; and
d) a controller (9), which comprises valves (10, 10') arranged in the (n≥2) individual feed line parts (6', 6") or (n≥2) return line parts (7', 7") and having actuators (11, 11') which are designed for setting an opening degree of the respectively associated valve (10, 10'), wherein the controller (9) is designed for actuating the actuators (11, 11') and for reading the return flow temperature sensors (8, 8') and comprises a room temperature sensor (12) for detecting and reporting an ACTUAL temperature (13) in an immediate environment of the component (4).

19. Temperature-control system (1) according to claim 18, **characterized in that** the controller (9) comprises a data memory (16) for storing parameters, wherein the parameters are selected from a group which comprises at least one TARGET temperature (14), a first temperature window (15), a second temperature window (23), a first, second, third to n^{th} closing time (t₁, t₂, t₃,...,tₙ) and a first, second, third to m^{th} open time (t₄, t₅, t₆,...,tₘ), **and in that** the controller (9) comprises a computer (17) for retrieving and processing the parameters from the data memory (16) and for controlling the temperature-control system (1).

20. Temperature-control system (1) according to claim 18 or 19, **characterized in that** the individual feed line parts (6', 6") open into a feed distribution beam (18), wherein the feed distribution beam (18) is connected to the temperature-control device (3) via a common feed section line (6).

21. Temperature-control system (1) according to claim 18 or 19,
**characterized in that** the individual return line parts (7', 7") open into a return distribution beam (19), wherein the return distribution beam (19) is connected to the temperature-control device (3) via a common return section line (7).

22. Temperature-control system (1) according to one of claims 20 or 21, **characterized in that** it comprises a circulating pump (20) installed in the common flow section line (6) or in the common return section line (7).

## Revendications

1. Procédé pour tempérer un composant, dans lequel il est fourni un système de régulation de température (1) qui comprend :
a) un dispositif de régulation de température (3) conçu pour chauffer ou refroidir un fluide de régulation de température (2) ;
b) au moins deux, c.à.d. (n ≥ 2) agencements de régulation de température (5, 5') qui sont conçus pour faire passer le fluide de régulation de température (2) à travers un composant à tempérer (4) et qui sont raccordés au dispositif de régulation de température (3) par le biais de (n ≥ 2) parties de conduite d'alimentation individuelles (6', 6") et de (n ≥ 2) parties de conduite de retour (7', 7"), chacune des (n ≥ 2) parties de conduite de retour individuelles (7', 7") comprenant un capteur de température de retour (8, 8') pour mesurer la température de retour individuelle du fluide de régulation de température (2) depuis l'agencement de régulation de température correspondant (5, 5') ; et
c) une commande (9) qui comprend des soupapes (10, 10') avec actionneurs (11, 11') agencées dans les (n ≥ 2) parties de conduite d'alimentation individuelles (6', 6") ou (n ≥ 2) parties de conduite de retour (7', 7"), les actionneurs (11, 11') étant conçus pour régler un degré d'ouverture de la soupape associée (10, 10'), la commande (9) étant conçue pour commander les actionneurs (11, 11') et pour lire le capteur de température de retour (8, 8') et comprenant un capteur de température ambiante (12) pour déterminer et signaler une température réelle (13) dans un environnement immédiat du composant (4) ;
le procédé de régulation de température étant **caractérisé en ce que** :
i) on renonce à l'utilisation de capteurs de température d'entrée ;
ii) on prédétermine une température de consigne (14) pour l'environnement immédiat du composant (4) ;
iii) on définit une première fenêtre de température (15) ne comprenant pas la température de consigne prédéterminée (14) comme première différence de température positive (ΔT₁) pour refroidir le composant (4) ou comme première différence de température négative (ΔT₂) pour chauffer le composant (4) à la température de consigne prédéterminée (14) et on la met en oeuvre dans la commande (9) ; et
iv) la commande (9), lorsque la température réelle (13) fournie par le capteur de température ambiante (12) entre dans la première fenêtre de température (15) suite à un changement de température, donne l'ordre aux actionneurs (11) des [1 à (n-1)] agencements de régulation de température (5), dont la température de retour dépasse les températures de retour des autres [1 à (n-1)] agencements de régulation de température (5') dans le sens du changement de température actuel, de fermer la soupape (10) pour une première durée de fermeture (t₁), la commande (9) donnant l'ordre aux actionneurs (11') des autres [1 à (n-1)] agencements de régulation de température (5') de maintenir les soupapes (10') ouvertes pendant la première durée de fermeture (t₁).

2. Procédé de régulation de température selon la revendication 1, **caractérisé en ce qu'**il est choisi un nombre de (n) agencements de régulation de température (5, 5') à partir d'un groupe comprenant les (n = 2), (n = 3), (n = 4) et (n = 5) agencements de régulation de température (5, 5').

3. Procédé de régulation de température selon la revendication 2, **caractérisé en ce que** le nombre (n) des agencements de régulation de température (5, 5') est défini comme étant (n > 2), la commande (9) étant programmée de telle sorte que, lorsque la température réelle (13) fournie par le capteur de température ambiante (12) entre dans la première fenêtre de température (15) suite à un changement de température,
a) elle donne l'ordre à l'actionneur (11) d'un seul agencement de régulation de température (5), dont la température de retour dépasse les températures de retour de tous les autres (n-1) agencements de régulation de température (5') dans le sens du changement de température actuel, de fermer la soupape (10) pour la première durée de fermeture (t₁) et donne l'ordre à tous les autres (n-1) agencements de régulation de température (5') de maintenir les soupapes (10') ouvertes pendant la première durée de fermeture (t₁) ;
ou
b) donne l'ordre aux actionneurs (11) des (n-1) agencements de régulation de température (5), dont les températures de retour dépassent la température de retour d'un seul agencement de régulation de température (5') dans le sens du changement de température actuel, de fermer les (n-1) soupapes (10) pour la première durée de fermeture (t₁) et donne l'ordre au seul agencement de régulation de température (5') de maintenir la soupape (10') ouverte pendant la première durée de fermeture (t₁) ;
ou
c) de procéder conformément au procédé a) jusqu'à obtenir une différence de 0,3 °C entre la température réelle (13) et la température de consigne (14) et de procéder conformément au procédé b) à partir du moment où on a atteint une différence de 0,2 °C entre la température réelle (13) et la température de consigne (14).

4. Procédé de régulation de température selon la revendication 1, 2 ou 3, **caractérisé en ce que** la commande (9), après expiration de la première durée de fermeture (t₁), dans le cas où le dispositif de régulation de température (3) est conçu pour chauffer le fluide de régulation de température (2), et dans le cas où la température réelle (13) fournie par le capteur de température ambiante (12) se trouve encore dans la première différence de température négative (ΔT₂), donne l'ordre aux actionneurs (11) des [1 à (n-1)] agencements de régulation de température (5), dont les températures de retour sont les plus élevées, de fermer les soupapes (10) pour une deuxième durée de fermeture (t₂), la commande (9) donnant l'ordre aux actionneurs (11') des autres [1 à (n-1)] agencements de régulation de température (5') de maintenir les soupapes (10') ouvertes pendant la deuxième durée de fermeture (t₂).

5. Procédé de régulation de température selon la revendication 4, **caractérisé en ce que** la commande (9), après expiration de la deuxième durée de fermeture (t₂), donne l'ordre aux actionneurs (11) des [1 à (n-1)] agencements de régulation de température (5), dont les températures de retour sont les plus élevées, de fermer les soupapes (10) pour une troisième durée de fermeture (t₃), la commande (9) donnant l'ordre aux actionneurs (11') des autres [1 à (n-1)] agencements de régulation de température (5') de maintenir les soupapes (10') ouvertes pendant la troisième durée de fermeture (t₃).

6. Procédé de régulation de température selon la revendication 5, **caractérisé en ce que** l'on répète ces étapes de procédé jusqu'à ce que l'on éteigne le dispositif de régulation de température (3) ou jusqu'à ce qu'il soit déterminé une nouvelle température de consigne (14) pour l'environnement immédiat du composant (4) et qu'elle soit mise en oeuvre dans la commande (9).

7. Procédé de régulation de température selon la revendication 1, 2 ou 3, **caractérisé en ce que** la commande (9), après expiration de la première durée de fermeture (t₁), donne l'ordre aux actionneurs (11, 11') de tous, c.à.d. des (n) agencements de régulation de température (5, 5'), d'ouvrir les soupapes (10, 10') pour une première durée d'ouverture (t₄).

8. Procédé de régulation de température selon la revendication 7, **caractérisé en ce que** la commande (9), après expiration de la première durée d'ouverture (t₄), dans le cas où le dispositif de régulation de température (3) est conçu pour chauffer le fluide de régulation de température (2), et dans le cas où la température réelle fournie par le capteur de température ambiante (12) se trouve encore dans la première différence de température négative (ΔT₂), donne l'ordre aux actionneurs (11) des [1 à (n-1)] agencements de régulation de température (5), dont les températures de retour sont les plus élevées, de fermer les soupapes (10) pour une deuxième durée de fermeture (t₂), la commande (9) donnant l'ordre aux actionneurs (11') des autres [1 à (n-1)] agencements de régulation de température (5') de maintenir les soupapes (10') ouvertes pendant la deuxième durée de fermeture (t₂), et la commande (9), après expiration de la deuxième durée de fermeture (t₂), donnant l'ordre aux actionneurs (11, 11') de tous les (n) agencements de régulation de température (5, 5') d'ouvrir les soupapes (10, 10') pour une deuxième durée d'ouverture (t₅).

9. Procédé de régulation de température selon la revendication 8, **caractérisé en ce que** la commande (9), après expiration de la deuxième durée d'ouverture (t₅), donne l'ordre aux actionneurs (11) des [1 à (n-1)] agencements de régulation de température (5), dont les températures de retour sont les plus élevées, de fermer les soupapes (10) pour une troisième durée de fermeture (t₃), la commande (9) donnant l'ordre aux actionneurs (11') des autres [1 à (n-1)] agencements de régulation de température (5') de maintenir les soupapes (10') ouvertes pendant la troisième durée de fermeture (t₃), et la commande (9), après expiration de la troisième durée de fermeture (t₃), donnant l'ordre aux actionneurs (11, 11') de tous les (n) agencements de régulation de température (5, 5') d'ouvrir les soupapes (10, 10') pour une troisième durée d'ouverture (t₆).

10. Procédé de régulation de température selon l'une des revendications 8 ou 9, **caractérisé en ce que** la commande (9), dans le cas où la température réelle (13) fournie par le capteur de température ambiante (12), après expiration de la première, deuxième, troisième ou mième durée d'ouverture (t₄, t₅, t₆, ..., tₘ), est supérieure à la première différence de température négative (ΔT₂), donne l'ordre aux actionneurs (11, 11') de tous les (n) agencements de régulation de température (5, 5') de fermer les soupapes (10, 10').

11. Procédé de régulation de température selon l'une des revendications 8 ou 9, **caractérisé en ce que** la commande (9), dans le cas où la température réelle fournie par le capteur de température ambiante (12), après expiration de la première, deuxième, troisième ou mième durée d'ouverture (t₄, t₅, t₆, ..., tₘ) est plus basse que la première différence de température négative (ΔT₂), donne l'ordre aux actionneurs (11, 11') de tous les (n) agencements de régulation de température (5, 5') d'ouvrir les soupapes (10, 10').

12. Procédé de régulation de température selon la revendication 9, **caractérisé en ce que** l'on répète ces étapes de procédé jusqu'à ce que l'on éteigne le dispositif de régulation de température (3) ou jusqu'à ce qu'il soit défini une nouvelle température de consigne (14) pour l'environnement immédiat du composant (4) et que cette dernière soit mise en oeuvre dans la commande (9).

13. Procédé de régulation de température selon l'une des revendications 1 à 5 ou 8 à 12, **caractérisé en ce que** la commande (9), dans le cas où le dispositif de régulation de température (3) est conçu pour chauffer le fluide de régulation de température (2), et dans le cas où la température réelle (13) fournie par le capteur de température ambiante (12) après expiration de la première, deuxième, troisième ou nième durée de fermeture (t₁, t₂, t₃, ..., tₙ) est supérieure à la première différence de température négative (ΔT₂), donne l'ordre aux actionneurs (11, 11') de tous les (n) agencements de régulation de température (5, 5') de fermer les soupapes (10, 10').

14. Procédé de régulation de température selon l'une des revendications précédentes, **caractérisé en ce qu'**il est défini une deuxième fenêtre de température (23) ne comprenant pas la température de consigne prédéfinie (14) et ne comprenant que des parties de la première fenêtre de température (15) et **en ce que** cette deuxième fenêtre de température (23) est mise en oeuvre dans la commande (9), la deuxième fenêtre de température (23) étant définie comme une deuxième différence de température positive (ΔT₃) ou comme une deuxième différence de température négative (ΔT₄) par rapport à la température de consigne prédéterminée (14).

15. Procédé de régulation de température selon la revendication 14, **caractérisé en ce que** la commande (9), dans le cas où le dispositif de régulation de température (3) est conçu pour chauffer le fluide de régulation de température (2), et dans le cas où la température réelle (13) fournie par le capteur de température ambiante (12) après expiration de la première, deuxième, troisième ou nième durée de fermeture (t₁, t₂, t₃, ..., tₙ) est plus basse que la deuxième différence de température négative (ΔT₄), donne l'ordre aux actionneurs (11, 11') de tous les (n) agencements de régulation de température (5, 5') d'ouvrir les soupapes (10, 10').

16. Procédé de régulation de température selon la revendication 14, **caractérisé en ce que** la commande (9), dans le cas où le dispositif de régulation de température (3) est conçu pour chauffer le fluide de régulation de température (2), et dans le cas où la température réelle (13) fournie par le capteur de température ambiante (12) après expiration de la première, deuxième ou troisième durée de fermeture (t₁, t₂, t₃) se trouve dans la deuxième différence de température négative (ΔT₄), donne l'ordre aux actionneurs (11) des ([1 à (n-1)] agencements de régulation de température (5, 5'), dont les températures de retour sont les plus élevées, de fermer les soupapes (10) pour une nième durée de fermeture (tₙ), la commande (9) donnant l'ordre aux actionneurs (11') des autres [1 à (n-1)] agencements de régulation de température (5') de maintenir les soupapes (10') ouvertes pendant la nième durée de fermeture (tₙ).

17. Procédé de régulation de température selon la revendication 14, **caractérisé en ce que** la commande (9), dans le cas où le dispositif de régulation de température (3) est conçu pour chauffer le fluide de régulation de température (2), et dans le cas où la température réelle (13) fournie par le capteur de température ambiante (12) après expiration de la première, deuxième ou troisième durée de fermeture (t₁, t₂, t₃) est supérieure à la deuxième différence de température négative (ΔT₄), donne l'ordre aux actionneurs (11, 11') de tous les (n) agencements de régulation de température (5, 5') de fermer les soupapes (10, 10').

18. Système de régulation de température (1) pour réaliser le procédé de régulation de température selon l'une des revendications 1 à 17, **caractérisé en ce que** le système de régulation de température (1) comprend :
a) un dispositif de régulation de température (3) conçu pour chauffer ou refroidir un fluide de régulation de température (2) ;
b) au moins deux, c.à.d. (n ≥ 2) agencements de régulation de température (5, 5') qui sont conçus pour faire passer le fluide de régulation de température (2) à travers un composant à tempérer (4) et qui sont raccordés au dispositif de régulation de température (3) par le biais de (n ≥ 2) parties de conduite d'alimentation individuelles (6', 6") et de (n ≥ 2) parties de conduite de retour individuelles (7', 7"), chacune des (n ≥ 2) parties de conduite de retour individuelles (7', 7") comprenant un capteur de température de retour (8, 8') pour mesurer la température de retour individuelle du fluide de régulation de température (2) à partir de l'agencement de régulation de température correspondant (5, 5') ;
c) aucun capteur de température d'entrée ; et
d) une commande (9) qui comprend des soupapes (10, 10') avec actionneurs (11, 11') agencées dans les (n ≥ 2) parties de conduite d'alimentation individuelles (6', 6") ou dans les (n ≥ 2) parties de conduite de retour (7', 7"), les actionneurs (11, 11') étant conçus pour régler un degré d'ouverture de la soupape associée (10, 10'), la commande (9) étant conçue pour commander les actionneurs (11, 11') et pour lire le capteur de température de retour (8, 8') et comprenant un capteur de température ambiante (12) pour déterminer et afficher une température réelle (13) dans un environnement immédiat du composant (4).

19. Système de régulation de température (1) selon la revendication 18, **caractérisé en ce que** la commande (9) comprend une mémoire de données (16) pour stocker des paramètres, les paramètres étant choisis à partir d'un groupe qui comprend au moins une température de consigne (14), une première fenêtre de température (15), une deuxième fenêtre de température (23), une première, deuxième, troisième jusqu'à une nième durée de fermeture (t₁, t₂, t₃, ..., tₙ) et une première, deuxième, troisième jusqu'à une miène durée d'ouverture (t₄, t₅, t₆, ..., tₘ), et **en ce que** la commande (9) comprend un ordinateur (17) pour récupérer et traiter les paramètres issus de la mémoire de données (16) et pour contrôler le système de régulation de température (1).

20. Système de régulation de température (1) selon la revendication 18 ou 19, **caractérisé en ce que** les parties de conduite d'alimentation individuelles (6', 6") débouchent dans un distributeur d'alimentation (18), le distributeur d'alimentation (18) étant raccordé au dispositif de régulation de température (3) par le biais d'une conduite d'alimentation commune (6).

21. Système de régulation de température (1) selon la revendication 18 ou 19, **caractérisé en ce que** les parties de conduite de retour individuelles (7', 7") débouchent dans un distributeur de retour (19), le distributeur de retour (19) étant raccordé au dispositif de régulation de température (3) par le biais d'une conduite de retour commune (7).

22. Système de régulation de température (1) selon l'une des revendications 20 ou 21, **caractérisé en ce qu'**il comprend une pompe de circulation (20) qui est installée dans la conduite d'alimentation commune (6) ou dans la conduite de retour commune (7).
